Europäisches Patentamt

European Patent Office

Office européen des brevets

(11) Publication number: **0 110 480 B1**

(12) **EUROPEAN PATENT SPECIFICATION**

(45) Date of publication of patent specification: **24.07.91** (51) Int. Cl.⁵: **G10K 11/26**

(21) Application number: **83201683.6**

(22) Date of filing: **29.11.83**

(54) Phased array transducer apparatus.

(30) Priority: **02.12.82 US 446330**

(43) Date of publication of application:
**13.06.84 Bulletin 84/24**

(45) Publication of the grant of the patent:
**24.07.91 Bulletin 91/30**

(84) Designated Contracting States:
**DE FR GB IT NL SE**

(56) References cited:
US-A- 3 225 326     US-A- 3 309 653
US-A- 3 325 779     US-A- 3 564 491
US-A- 3 895 688     US-A- 4 268 912

(73) Proprietor: **Magnavox Government and Indus-
trial Electronics Company
1313 Production Road
Fort Wayne, Indiana 46808(US)**

(72) Inventor: **Congdon, John C.**
c/o **INT. OCTROOIBUREAU B.V. Prof. Holst-
laan 6
NL-5656 AA Eindhoven(NL)**

(74) Representative: **van der Kruk, Willem Leonar-
dus et al
INTERNATIONAAL OCTROOIBUREAU B.V.
Prof. Holstlaan 6
NL-5656 AA Eindhoven(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

#### Field of the invention

The present invention relates to an electroacoustic transducer and more particularly to an improved cylindrically configured phased array transducer for transmitting and receiving acoustic signals.

#### Description of the Prior Art

Acoustical transducer arrays comprising a number of individual cylindrical electroacoustic transducer elements, typically arranged in axial alignment, for providing predetermined radiation and response patterns are well known and are used to a considerable extent in both active and passive sonar and sonobuoy systems, see for example US-A-3564491. Transducer arrays which operate to provide a directional acoustical radiation and response patterns in a vertical plane or in a plane containing the longitudinal axis of the array are advantageously used in such systems since they can provide greater radiated acoustical energy and/or improved receiving sensitivity, in directions broadside the array, i.e. substantially perpendicular to the array axis, in the vertical plane, with an accompanying improvement of detected signal to noise ratio. Broadside vertical pattern directivity can also provide a reduction in undesired effects caused by acoustic reflections transmitted and/or received from the top and bottom surfaces of the water body in which the array is operated.

The basic criteria for broadside acoustic beam forming is well known in the art and in general requires a predetermined number of individual active transducer elements spaced apart predetermined distances and operated at predetermined relative amplitudes and phases for providing a desired directivity. In prior in-line or stacked multielement arrays the relative amplitude and phasing of the individual transducer elements are generally obtained by electrical circuit means while maintaining the predetermined physical spacing of the elements. In such prior art arrays using piezoelectric transducer elements amplitude control or amplitude shading of the elements are also obtained by adjusting the electrode area of the various elements.

Numerous underwater detection systems exist which utilize electroacoustic transducer element arrays having both vertical and horizontal directivity patterns. One such prior art transducer array provides vertical directivity in combination with a directional and omnidirectional horizontal pattern and comprises a number of individual vertically stacked hollow cylindrical shaped piezoelectric electroacoustic transducer sections or elements. Each one of the elements is in itself an active piezoelectric electroacoustic transdurcer element. Certain of these individual elements are polarised and provided with electrodes so as to provide a directional horizontal pattern while others are polarised and electrodes to provide an omnidirectional horizontal pattern. Broadside vertical directivity of this prior art is provided by proper electrical phasing and physical spacing of the respective individual directional and omnidirectional transducer elements.

Directional pattern symmetry of these prior art arrays require exactly uniformity of not only the homogeneity and physical dimensions of the piezoelectric material, but also of the manufacturing processes involved for each one of the individual transducer elements used in the array. This required matching of the individual piezoelectric elements is especially critical in multielement arrays which provide both broadside vertical directivity and omnidirectional and sine-cosine like horizontal directivity patterns for use in detection systems which use electrical output signals from the array to compute target bearing information- In In addition, when uniformity between a number of individual transducer arrays of the same type is required, these control and matching problems become even more severe. This inherent matching requirement of these prior art multielement stacked arrays and the relatively large amount of piezoelectric material required to manufacture a single transducer array results in an array of relatively high unit cost. When these prior art multielement arrays are used in an expendable and high value engineered sonobuoy, the cost of the array can represent a sizeable amount of the total cost of the sonobuoy. Also, the arrays are relatively heavy due to the number of piezoelectric elements required. Examples of these prior art devices are described for example in US-A- 3 325 779 or US-A- 3 895 688.

### SUMMARY OF THE INVENTION

It is an object of the present invention to provide a transducer apparatus having broadside vertical directivity which is inexpensive to manufacture relative to the cost of comparable prior art multielement transducer arrays.

It is a further object to provide in the previous object a combination of active electroacoustic transducer elements and acoustic coupling ports where the ports effectively act as active elements in the array.

It is another object of the present invention to provide a transducer apparatus having a hollow cylindrically or tubularly configured body and having a plurality of acoustic coupling ports and a single electroacoustical transducer element operating in combination with the ports for providing a broadside vertical directivity pattern.

It is an object of the present invention to provide an improved transducer apparatus having broadside vertical directivity which is especially suited for use as a hydrophone for receiving underwater acoustic signals and as a projector for transmitting underwater acoustic signals.

It is another object of the present invention to provide a transducer apparatus which is lightweight, easily packaged and deployed and suitable for use in sonobuoys.

It is yet another object of the present invention to provide a phased array underwater transducer which performance is not affected by hydrostatic pressure.

It is a further object of the present invention to provide a transducer apparatus using a single active transducer element and having a reinforced broadside directional response pattern in the vertical plane and omnidirectional and/or directional response patterns in the horizontal plane.

A further object of the present invention is to provide a transducer apparatus having an elongated tube in which electroacoustic transducer elements and acoustic coupling ports are alternately positioned in the longitudinal direction. According to the present invention, transducer apparatus is as claimed in claim 1. Further advantageous features are recited in the dependent claims.

These and other objects and advantages will become more apparent when embodiments of this invention are disclosed in connection with the drawings, briefly described as follows.

## BRIEF DESCRIPTION OF THE DRAWINGS

Fig. 1 is a view in perspective of one embodiment of a phased array transducer in accordance with the present invention;

Fig.2 is a side elevation view of the embodiment shown in Fig. 1;

Fig. 3 is a top plan view of the phased array transducer shown in Figs. 1 and 2:

Fig 4 is an enlarged partial quarter sectional view of the transducer element portion of the transducer shown in Figs. 1, 2 and 3 taken along the lines 4-4 of Fig. 3;

Fig. 5 is an enlarged partial cross sectional view of the transducer element taken along the lines 5-5 in Fig. 4;

Fig. 5a is a connection diagram for the leads of the transducer element of Figs. 5 and 23 to obtain sine, cosine and omnidirectional acoustical wave patterns;

Fig. 5b is a simplified cross sectional view similar to that of Fig.5;

Fig. 5c is a simplified cross sectional view of the transducer element of Fig. 23;

Fig. 6 is a partial and simplified cross sectional view taken along line 6-6 of the phased array transducer of Fig. 2 showing the relationship between the cylindrical transducer element and the annular ports in the wall of the cylindrical tube;

Fig. 6a is a view similar to Fig. 6 wherein acoustically transparent membranes cover the annular ports;

Fig. 7 shows typical sine/cosine like directional field patterns and a typical omnidirectional field pattern which patterns are capable of being provided by the present invention in a plane containing the X and Y axes;

Fig. 8 shows a typical directional field pattern in a plane containing the Z axis and generated broadside of the Z axis and capable of being provided by the present invention in conjunction with the filed patterns of Fig.7;

Fig. 9 is a partial and simplified cross sectional view of a phased array transducer similar to the view of Fig. 6 and having phase shift controlling waveguide baffles inserted in the tube for increasing the internal acoustic transmission path lengths;

Fig. 10 is an enlarged view in perspeotive of a cylindrical electroacoustic transducer element in combination with a quadrant electroacoustic transducer element baffle in accordance with the present invention;

Fig. 11 is a top plan view of the cylindrical electroacoustic transducer element and the element baffle shown in Fig. 10;

Fig. 12 is an enlarged partial cross sectional view of the baffle shown in Fig. 11 and taken along the line 12-12;

Fig. 13 is a view in perspective of another embodiment of a phased array transducer of the present invention using a different configuration for mounting the cylindrical transducer element;

Fig. 14 is a side elevational view of the embodiment of the present invention as shown in Fig. 13;

Fig. 14a is a top plan view of the embodiment shown in Figs. 13 and 14;

Fig. 15 is an enlarged partial cross sectional view taken along line 15-15 in Fig. 14;

Fig. 16 is an enlarged partial sectional view of the electroacoustic transducer element portion of the phased array taken along line 16-16 in Fig. 15; Fig. 17 is a view in perspective of the phased array transducer suitable for use in a sonobuoy and showing the transducer prior to its deployment;

Fig. 18 is a view in perspective of the embodiment of Fig. 17 shown after deployment;

Fig. 19 is a partial and simplified longitudinal cross sectional view of the deployed phased array transducer shown in Fig. 18 showing the relationship of the cylindrical transducer element and the annular port in the wall of the cylindrical tube.

Fig. 20 is an enlarged partially sectioned partial view of the electroacoustic transducer element portion of the embodiment disclosed in Figs. 17-19;

Fig. 20A is a further enlarged partial sectioned view of the element and tube of the embodiment of Figs. 17-20 in the deployed state;

Fig. 21 is a view in perspective of a further electroacoustic transducer element that is a circular cylinder that is polarized tangentially and is usable in the phased arrays of this invention;

Fig. 22 is a simplified longitudinal cross section of an array of this invention having alternate ports and transducer elements;

Fig. 23 is a partial enlarged, simplified, longitudinal cross section of an array of this invention having another embodiment of a phase shift control internally of the array tube comprising a plurality of circular perforated plates;

Fig. 23A is simplified longitudinal cross section of a transducer array having two phase shift controls of the kind shown in Fig. 23 mounted in an array tube;

Fig. 24 is a view in perspective of a single perforated plate of the Fig. 23 embodiment; and

Fig. 25 is an enlarged cross section of a portion of the plate in Fig.24.

## DESCRIPTION OF THE PREFERRED EMBODIMENTS

In the following descriptions and accompanying drawing figures of the present invention, like reference characters designate like parts and functions throughout-Although

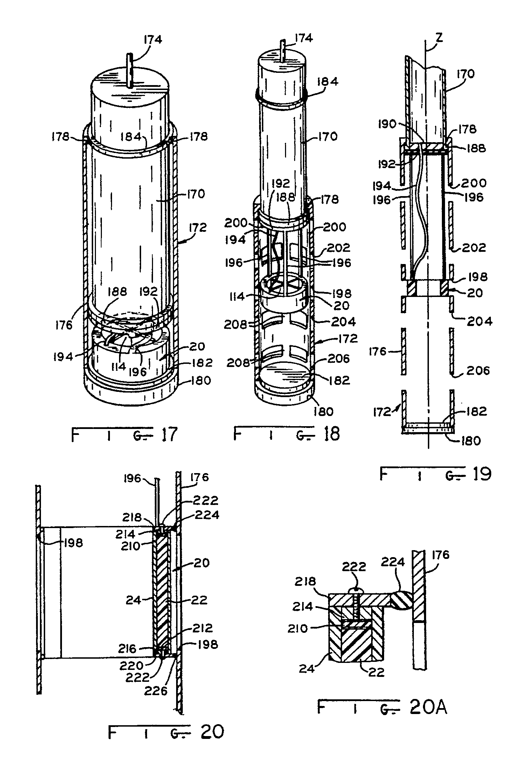

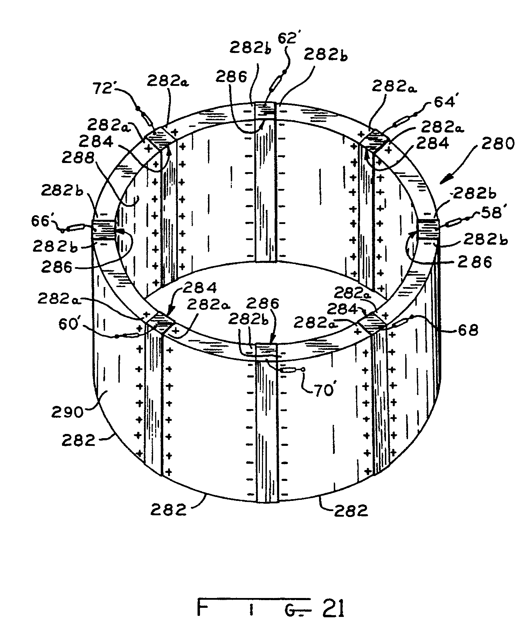

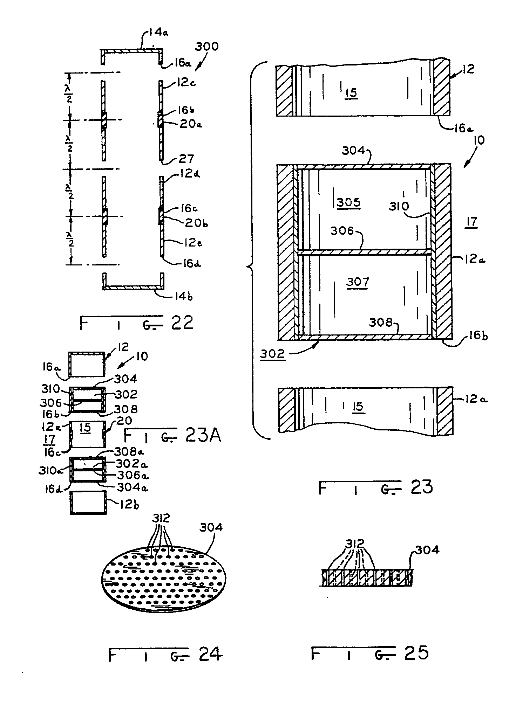

the present invention is intended primarily for transmitting and/or receiving underwater acoustic signals or sound waves, other uses will be apparent to those skilled in the art. In general, the present invention pertains to a transducer array which comprises a single electroacoustic transducer element and an elongated cylindrical enclosure or tube having a longitudinal axis and a plurality of annular acoustic ports for providing a directional and/or an omnidirectional acoustical field pattern in a plane perpendicular to the longitudinal axis, as shown in Fig. 7, and a reinforced directional field pattern in a plane parallel to or containing the longitudinal axis, as shown in Fig. 8, which figures will be referenced and described in more detail hereinafter. The field patterns in Figs. 7 and 8 correspond to the horizontal and vertical planar field patterns, respectively, when the attitude of longitudinal axis of the array enclosure or tube is vertical as would be a typical operating attitude when the transducer array is used as a sonobuoy hydrophone for transmitting and/or receiving underwater signals. It should be understood that these field patterns represent both the transmitting and receiving directional properties of the transducer array since the arrays of this invention in general are reciprocal. It should be understood that the use herein of the word hydrophone implies a transducer for transmitting and/or receiving acoustic signals and such use thus applies to both projectors and/or hydrophones.

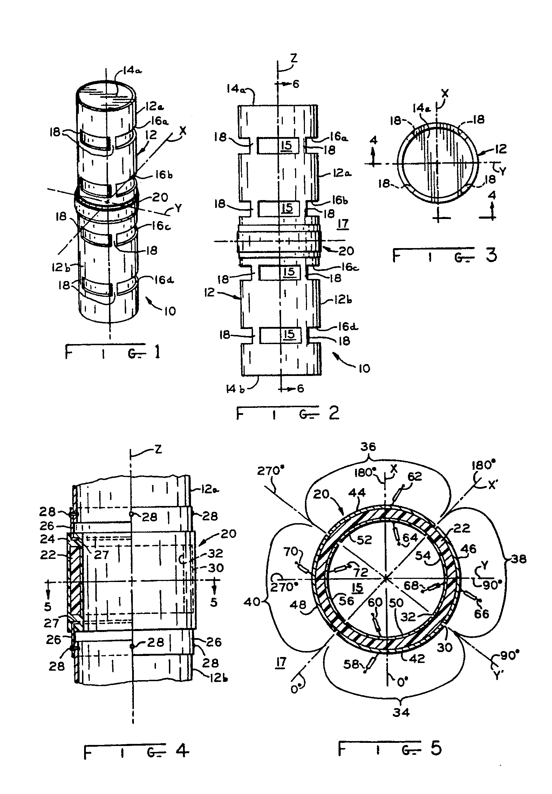

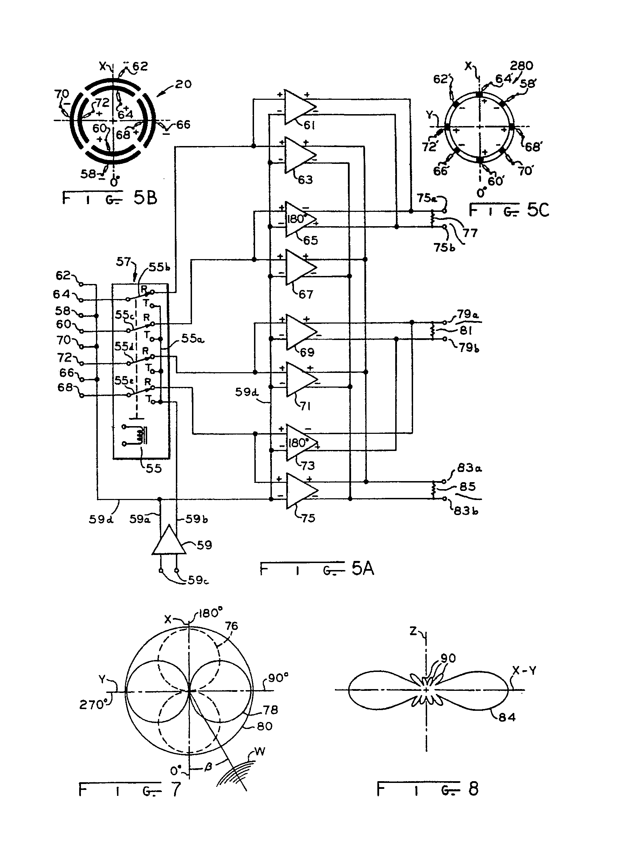

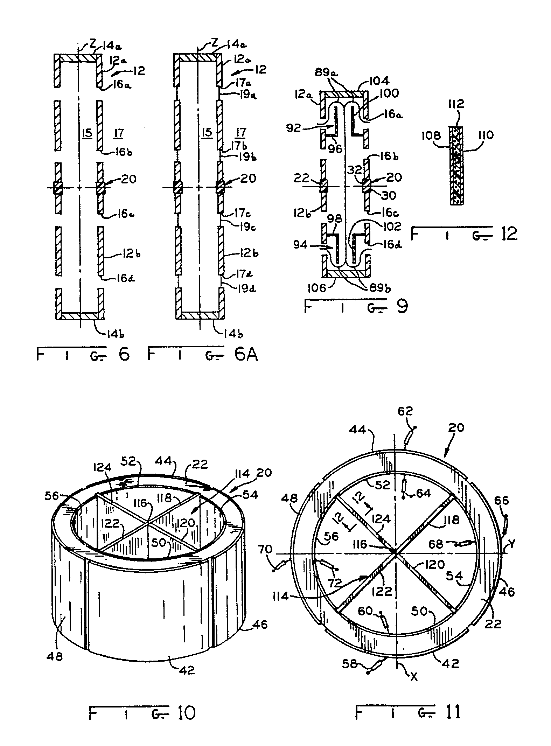

Referring now to Figs. 1, 2 and 3 there are shown a pictorial, side, and top views respectively of a phased transducer array 10 in accordance with the present invention. The transducer array 10 comprises an elongated cylindrical tube 12 of a suitable material such as a metal or a rigid plastic and has suitable longitudinal and diameter dimensions depending on the desired acoustical frequency range and desired beam pattern for which transducer array 10 is designed. It is preferred that tube 12 material have a low acoustic transmissivity, high insensitivity to acoustic vibrations, and low acoustic absorption. Aluminum has been used as a tube material. Tube 12 has ends 14a, 14b at the upper and lower ends, respectively, thereof and a plurality of substantially annular apertures or ports 16a, 16b, 16c, 16d formed in the wall of tube 12 at predetermined longitudinally spaced apart locations along the length dimension of tube 12. Apertures 16a-16d each provide an acoustic coupling port between the internal transmission medium 15 internally of tube 12 and the external transmission medium 17 externally of tube 12. Ports 16a-16d are each formed of four equal arcuate apertures separated by longitudinal struts or ribs 18 which join portions of tube 12 above and below ports 16a-16d to provide longitudinal structural integrity of tube 12. Ribs 18 are preferably made as thin as possible in the circumferential direction and still maintain the structural rigidity of tube 12. Also, it is preferable that ribs 18 are equally spaced about the circumference of their respective ports to achieve wave pattern symmetry. The width of ribs 18 in the circumferential direction should be enough to provide structural integrity of tube 12 and to offer a means of decoupling adverse resonances in the tube 12. However, the width should be small compared to the wavelength of the acoustic wave in the medium so that the ribs 18 do not limit the transmission of the acoustical wave through a port aperture and do not interfere with the incoming wave when the transducer array 10 is receiving and forming sine and cosine like directivity patterns in the X-Y plane. For example, a ratio of rib width to wavelength of 1:15 is acceptable. Also a ratio of rib width to one quarter of tube 12 circumference of 1:6 was found to be acceptable. These ratios are a good compromise of acoustic performance and structural integrity of tube 12. Tube 12 comprises an upper elongated portion 12a and a lower elongated portion 12b. A hollow cylindrical or ring electroacoustical transducer element 20 is supported between portions 12a, 12b.

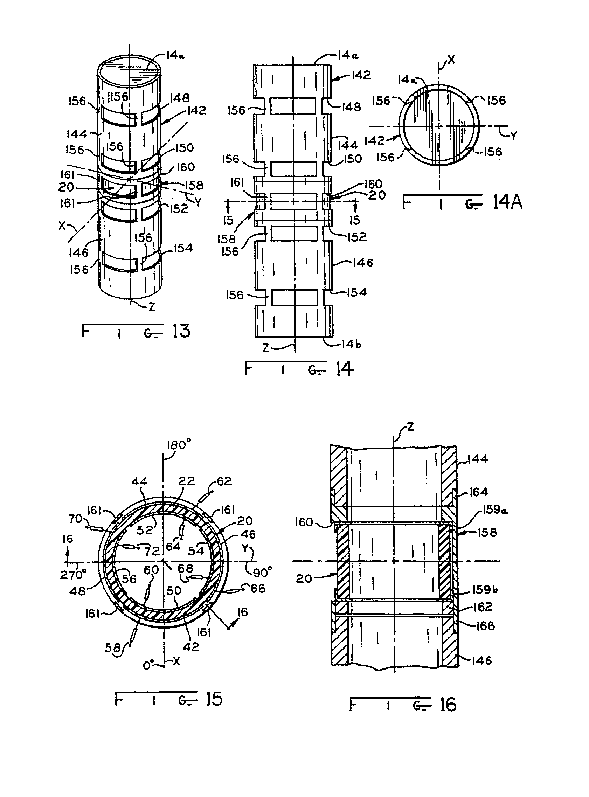

Referring to Figs. 4 and 5, element 20 comprises a hollow cylinder or ring 22 of an electroacoustic material such as piezoelectric material polarized to vibrate in a radial mode although other vibrational modes and types of electroacoustic transducer material can be used. A typical piezoelectric material is lead zirconate titanate. Element 20 is embedded or encapsulated in a suitable encapsulating material 24 such as an elastomeric or polymeric material which can be cast or molded about element 20. Also embedded in material 24 and concentrically positioned with and longitudinally spaced apart from each end edge of element 20 is a cylindrical mounting ring bracket 26 which brackets 26 are in turn affixed to portions 12a, 12b by arcuately spaced rivets 28 or other suitable fastening means such as, for example, machine screws or an epoxy adhesive. Material 24 provides mechanical support for element 20, is acoustically transparent to provide relatively good acoustical coupling between element 20 and mediums 15, 17, and aids in minimizing direct transmission of acoustic vibrations between element 20 and tube portions 12a, 12b, which vibration degrade the performance of the transducer array. The longitudinal spacing between brackets 26 provides a window area or port 27 for transmission of acoustic waves to and from element 20. Since the present invention is intended primarily for use in underwater applications, protection of the transducer element 20, and its electrodes, later described, from their environment is important and is provided by the encapsulating material 24. Material 24 can be comprised of layers or a combination of different materials to provide the above properties.

Referring to Fig. 5, in which material 24 has been omitted for purposes of clarity, piezoelectric ring 22 has outer vibratile surface 30 and inner vibratile surface 32. Ring 22 is comprised of quadrants 34, 36, 38, 40, having outer electrodes 42, 44, 46, 48, respectively, affixed in conventional manner to outer surface 30 and inner electrodes 50, 52, 54, 56 respectively, affixed in conventional manner to inner surface 32. Thus, electrode pair 42, 50 is in quadrant 34; electrode pair 44, 52 is in quadrant 36; electrode pair 46, 54 is in quadrant 38; and electrode pair 48, 56 is in quadrant 40. Each electrode covers substantially all of its respective quadrant and is spaced from the adjacent electrode on either arcuate side to prevent electrical communication with any other electrode. The electrodes are applied to their respective surfaces 30, 32 in a manner known to the art such as vapor deposition and are of a conductive material such as silver. Electrical leads 58, 60, 62, 64, 66, 68, 70, 72 are electrically coupled to electrodes 42, 50, 44, 52, 46, 54, 48, 56, respectively. Electrodes 42-56 are encapsulated in material 24. Leads 58-72 provide connections between their respective electrodes and external utilization circuitry.

As will be apparent to those skilled in the art, in the receiving mode of transducer array 10, planar response patterns for use in determining directivity of a received acoustical signal can be provided by connections as will be explained for Figs. 5a-5c. The difference in relative output signals from the electrode pair for opposite quadrants 34, 36 will provide a measure of the pressure gradient existing diametrically across the element 20 and will be maximum for acoustic wavefront travel in a direction along the X axis and minimum for wavefront travel in a direction along the Y axis thus providing a cosine-like directional field pattern such as shown by dashed line 76 of Fig. 7. Likewise, the difference in output signals of the electrode pair for opposite quadrants 38, 40 provides the sine-like field pattern shown by solid line 78 of Fig. 7, being maximum for a received wavefront along the Y axis and minimum for a received wavefront along the X axis. As used herein, the terms "sine" and "cosine" patterns refer in general to sine-like and cosine-like patterns since the actual patterns obtained may vary from exact sine and cosine patterns.

Adding or averaging of the output signals from all four electrode pairs from all four quadrants 34, 36, 38, 40 will provide an omnidirectional field pattern as shown by line 80 in Fig. 7. Other patterns, such as cardioid patterns, can be obtained as is known in the art. In the transmitting mode of transducer array 10, properly phased electrical signals can be applied to the corresponding quadrant electrode pairs of element 20 to generate an omnidirectional or directional acoustical wave patterns as may be desired. Various of the electrodes can for example be connected together or combined to form a single continuous outer electrode and in a like manner, and in lieu thereof, the inner electrodes can be connected in common or made a single continuous inner electrode.

Although the herein phased array transducer can provide horizontal directional patterns for both transmitting and receiving acoustic wave signals, the directional transmitting properties are not generally required when the transducer array is used in typical sonobuoy applications. As examples, in a passive type sonobuoy which operates to provide only the reception of acoustic signals, the transducer array would normally operate in the receive mode to provide desired horizontal directional and/or omnidirectional receiving patterns. In an active type sonobuoy which operates to provide both the transmission and reception of acoustic signals, the transducer array would normally operate to provide an omnidirectional pattern in the transmit mode while providing the desired directional and/or omnidirectional horizontal patterns in the receiving mode.

Referring now to Fig.5A, there is shown a schematic circuit for electrically combining the output signals of, or input signals to, transducer element 20, the electrodes and leads of which are shown in section in Fig. 5B, and transducer element 280, the element sections, electrodes and leads of which are shown in section in Fig. 5C. Fig. 5A is a connection diagram having a transmit/receive relay 57 for providing sine, cosine like, and omnidirectional receiving pattern and for transmitting an omnidirectional pattern. As will become apparent, sine and cosine patterns can be transmitted by reversing the amplifiers, making appropriate relay 57 connection changes and applying transmit signals to terminals 75a, 75b, 79a, 79b, in the circuit of Fig. 5A. The +(plus) and -(minus) signs shown on the various indicated leads of the schematic indicate relative voltage polarities when each transducer quadrant is separately subjected to a given identical mechanical movement or stress. The combining circuit of Fig.5A provides a mathematical combining and averaging of the individual transducer element quadrant outputs to provide simultaneous cosine like, sine like and omnidirectional pattern signals.

Electrode leads 60, 64, 68, 72, Fig. 5B, are electrically connected to their respective electrodes as previously described and are each coupled to transmit/receive relay 57. Electrode leads 58, 62, 66, 70 are electrically coupled to terminal 59a of power amplifier 59 and the common input terminals of each of the amplifiers 61, 63, 65, 67, 69, 71, 73 and 75 by common bus 59d. Electrode leads 58'-72', Fig. 5C, are electrically connected to their respective electrodes 284, 286 which will be described later in connection with tangentially polarized transducer element 280 in Fig. 23. For use with element 280, leads 60', 64', 68', 72' would each be connected to relay 57 instead of leads 60, 64, 68, 72 respectively and leads 58', 62', 55', 70, would be, electrically connected to common bus 59d instead of leads 58, 62, 66, 70, respectively.

Terminal 59b of power amplifier 59 is electrically coupled to transmit bus 55a in relay 57. Single pole double throw switches 55b-55e of relay 57 have their poles electrically coupled to leads 64, 60, 72, 68 respectively and each switch 55b-55e of relay 57 has a receive terminal R and a transmit termainl T. The blades of relay switches 55b-55e are ganged and mechanically coupled to and operated by solenoid or electromagnetic coil 55. The switch blades are shown in the deactivated condition of relay coil 55. Activation of coil 55 will cause each one of the switch blades to electrically switch from the respective R or receive terminals to the T or transmit terminals. Other means such as a solid state switching device can be used in place of relay 57.

Amplifiers 61, 63, 67, 69, 71, 75 are essentially zero phase shift amplifiers and amplifiers 65, 73 are essentially 180° phase shift amplifiers or inventers. Each one of the amplifiers may have a gain greater or less than one as may be desired for signal amplification and/or signal level compensation purposes, as is well known in the art. It is preferred that the gain of all amplifiers be identical when the sensitivities of all transducer quadrants are identical. The gain of each of these amplifiers may, however, be adjusted or varied in order to compensate for any differrences which might exist in the sensitivities of the different transducer quadrants. Receive terminal R for switch 55b is electrically connected to the + terminals of amplifiers 61, 63; terminal R for switch 55c is electrically coupled to the + terminals of amplifiers 65, 67; terminal R for switch 55d is electrically coupled to the + terminals of amplifiers 69, 71; and terminal R for switch 55e is electrically coupled to the + terminals of amplifiers 73, 75.

The transmit terminal T of each switch 55b-55e is electrically connected to bus 55a. The - input terminal of each amplifier 61-75 is electrically coupled to common bus 59d; the + output terminal of amplifier 61 and the - output terminal of inverter amplifier 65 are electrically coupled to cosine output terminal 75a; the - output terminal of amplifier 61 and the + output terminal of amplifier inverter 65 are electrically connected to cosine output terminal 75b; the +output terminal of amplifier 69 and the - output terminal of amplifier inverter 73 are electrically connected to sine output terminal 79a; the - output terminal of amplifier 69 and the + output terminal of amplifier 73 are electrically connected to sine output terminal 79b; the + output terminal of each of amplifiers 63, 67, 71, 75 is electrically connected to omnidirectional output terminal 83a; and the -output terminal of each of amplifiers 63, 67, 71, 75 is electrically connected to omnidirection output terminal 83b. Resistance 77 is electrically connected across sine output terminals 75a, 75b; resistance 81 is electrically connected across sine output terminals 79a, 79b; and resistance 85 is electrically connected across omnidirection output terminals 83a, 83b. Resistors 77, 81, and 85 provide resistive output loads to their respective amplifiers.

The electrical output signals from each one of the electroacoustic transducer quadrants associated with the respective electrode leads 58-72 are supplied as input signals to the combining circuit shown in Fig. 5A. Assuming relay 57 is in the receive position, as shown, hydrophone output signals developed at each one of the leads 58-72 are supplied to the input terminals of their corresponding amplifiers as previously described. The output terminals of amplifiers 63, 67, 71, 75 are connected in parallel and in turn are connected to the omnidirection signal output terminals 83a, 83b of the combiner. This parallel connection of the amplifier output terminals provides an averaging of the output signals from all of the element 20 quadrants for supplying an omnidirectional output signal at terminals 83a, 83b. If an omnidirectional signal output is not desired, the amplifiers 63, 67, 71, 75 may be omitted.

The output signals from transducer 20 quadrants associated with electrodes leads 72, 68 which are positioned in diametrically opposing quadrants of transducer element 20, such as are located along the Y axis, Figs. 5B, 5C, are supplied as input signals to amplifiers 69, 73, respectively. In a like manner, the output of the transducer element 20 quadrants associated with electrode leads 64, 60 are supplied as input signals to amplifiers 61, 65, respectively. The outputs of amplifiers 69, 73 are connected in parallel and are in turn connected to the sine directional output terminals 79a, 79b of the combiner. Amplifiers 69, 73 thus provide an algebraic combination or difference of the output signals of the element 20 quadrants associated with leads 72, 68 for supplying a sine pattern directional output signal at terminals 79a, 79b. Amplifiers 61, 65 operate in a like manner using the output signals from the opposing quadrants of transducer element 20 associated with electrode leads 64, 60 located along the X axis to provide a cosine directional output signal at terminals 75a, 75b.

If it is desired to transmit an omnidirectional signal, then relay 57 is actuated to move the relay switch blades of relay 57 to the T terminals. When a signal is provided to the input terminals 59c of amplifier 59 it is amplified and provided at terminals 59a, 59b where it in turn is provided to leads 58-72 through relay switches 55b-55e. The signals at leads 58-72 then drive the associated element 20 quadrants to transmit an acoustic wave in the medium. If it is desired to transmit a sine and/or cosine pattern acoustic wave, then the amplifiers 61, 65, 69, 73 are reversed in amplifying direction and when input signals are applied to the cosine terminals 75a, 75b and/or the sine terminals 79a, 79b, they are amplified with a gain and power levels sufficient to drive the element 20 quadrants to transmit an acoustic signal in the medium. It will be apparent to those skilled in the art that to provide sine and/or cosine transmitted patterns the circuitry shown in Fig. 5A would have to be modified to provide proper switching of the input and output terminals or leads of the respective amplifiers during transmit and receive conditions or modes.

Connections of electrode leads 58-72 to obtain axed X', Y', Fig. 5, which are shifted 45° from axes X, Y respectively, can among other possible ways include connecting electrode leads 62, 64 in parallel with electrode leads 66, 68 respectively for a first half section and connecting electrode leads 70, 72 in parallel with electrode leads 58, 60 respectively for a second half section and connecting both half sections in combined series sub-traction, or the signal outputs of the respective half sections otherwise combined to provide a resultant difference signal, in order to provide cosine response along the X' axis. Likewise, electrode leads 62, 64 are connected in parallel with electrode leads 70, 72 respectively for a third half section and electrode leads 66, 68 are connected in parallel with electrode leads 58, 60 respectively for the fourth half section and the third and fourth half sections are combined in series sub-traction, or the signal outputs of the respective half sections otherwise combined to provide a resultant difference signal, in order to provide sine response along Y' axis (Fig. 5) as would be understood by one skilled in the art. The above described connections for providing the first half section-second half section combination and the third half section-fourth half section combination respectively would be made in a time sequenced fashion to provide first the cosine pattern and then the sine pattern alternately as would be understood by one skilled in the art.

Referring to Figs. 1-8, the operation of transducer array 10 will be described. Transducer array 10 is reciprocal, i.e. it can transmit acoustic waves in the transmission medium from electrical input signals or it can receive acoustic waves in the transmission medium and convert them into electrical output signals. The receive mode of transducer array 10 will be described, it being understood that the operation in the transmit mode is the reciprocal or reverse thereof and the field pattern shown and described represent both the transmitting and receiving properties or capabilities of transducer array 10.

Transducer array 10 is typically suspended in a transmission medium, which is water when the transducer is used as a hydrophone, so that its longitudinal axis Z is vertical. When the direction of travel of acoustic wavefront W impinges transducer array 10 at an angle $\beta$ with the axis X in the horizontal plane, it impinges the external surface of element 20, and also enters ports 16a-16d and the waves entering ports 16a-16d are phase shifted and then impinge the internal surface of element 20 to reinforce the vibrational effect on element 20 of wave W on the external surface of element 20. Thus a resultant electrical output signal having a relatively high signal to noise ratio is provided by the transducer array 10. The signal to noise ratio is increased since lobe 84 is relatively narrow in the vertical plane and side lobes 90 are suppressed thereby rejecting responses from directions other than the main lobe direction.

In the transmitting mode, the above is reversed and electrical signals are transmitted to element 20 causing surfaces 30, 32 to vibrate and generate acoustical waves in the respective coupled transmission mediums. The waves from internal surface 32 travel internally of tube 12 and exhibit ports 16a-16d with a phase and amplitude to reinforce the wave from external surface 30 in the desired direction of travel.

The required relative phasing, amplitude, and spacing of the individual transducer elements of a prior art multielement transducer array to provide a desired broadside directional pattern is well known in the art and for example is treated in "Fundamentals of Acoustics" by Kinsler and Frey, Second Edition published 1962 by John Willey & Sons; "Theoretical Acoustics" by Morse and Ingard published 1968 by McGraw-Hill; and "Principles of Underwater Sound" by Urick published 1975 by McGraw-Hill. This prior art theory applies to the ported single element transducer array of this invention. Thus the advantages of the prior art multielement electroacoustic transducer array are obtained in the transducer array of the present invention having a single electroacoustic transducer element and a plurality of ports or alternating elements and ports.

In general, particle velocity of the acoustic wave at ports 16a-16d varies inversely with port aperture area, or longitudinal dimension of annular apertures of a given tube diameter. The particle velocity of the wave at an aperture is analogous to the velocity of the surface of a vibrating ceramic element of a prior art multielement transducer array. Intern 1 wave phase at ports 16a-16d is dependent on the frequency of the acoustic wave , the nature of the internal transmission medium, and upon the effective length of the acoustical path between each port and surface 32. Where a band of frequencies is being transmitted, the center frequency of the band is conveniently used as the frequency of the acoustic wave and distances between ports and surfaces are conveniently measured between their respective longitudinal midpoints.

Surface 32 vibrates 180° out of phase with surface 30. Therefore, if reinforcing in-phase waves from surfaces 30, 32 are desired through ports 16a-16d, ports 16b and 16c each should have an effective acoustical path length of substantially one half wavelength from surface 32, and ports 16a, 16d should have an effective acoustical path length of substantially one wavelength from ports 161, 16c respectively except that slightly different path lengths may be desired to obtain phase shading as is known in the art. Each additional port formed in tube 12 would have an effective acoustical path travel of substantially one wavelength from the next closest port to surface 32 for an in phase wave at that port with the same exception for shading as mentioned above. Increasing the number of ports having substantially in-phase waves will reduce the beam width of lobe 84, Fig. 8, in the vertical plane. Increasing the number ports within a given length of tube 12 decreases the vertical bean width and the amplitude and phase shading the acoustical signal at the ports can control and reduce side lobes.

In the above, ports 16a-16d are substantially symmetrical in longitudinal spacing from element 20. Symmetrical spacing obtains lobe 84, Fig. 8, in a direction substantially perpendicular to Z axis. By making ports 16a-16d physically nonsymmetrical about element 20 along the longitudinal axis of tube 12, lobe 84 can be tilted upwardly or downwardly to a desired angle from the perpendicular or broadside direction from the Z axis. In the present invention as in prior art multielement arrays, the beam can be tilted by applying a progressive phase delay to each port 16a-16d, the phase delay of a given port being the acoustic internal wave phase shift between the port and the internal surface 32 of the transducer element 20.

As used herein in describing the length of the internal wave travel or path in tube 12, the term "effective" defines the actual length of wave travel between a port and surface 32 of element 20 in tube 12, which length can be different than the actual physical spacing between the port and surface 32.

Factors affecting wave phase and amplitude at ports 16a-16d are the transmission medium in which the waves travel, the effective length of wave travel in tube 12 between a port and surface 32, the size of the port aperture, and the acoustical impedance of any reflecting surface such as an end wall.

In general, the smaller the size of a port aperture, the greater the acoustic wave particle velocity at that port. In one embodiment of the present invention for providing a given symmetrical broadside pattern, ports 16 b and 16c are equal in aperture size and ports 16a, 16d are equal in aperture size. The aperture size of ports 16a, 16d is larger than the aperture size for ports 16b, 16c.

Further, the aperture size of each of ports 16b, 16c is less than the area of surface 30 of element 20, the full area of surface 30 being acoustically exposed to the external transmission medium.

In general for the transducer array of the present invention, the acoustic waves radiated from the outer surfaces of the transducer element 20 and the surface of the ports 16a-16d are approximately in phase and the physical spacing between adjacent ports and also between the element 20 and an adjacent port is approximately one half wavelength of the nominal acoustic operating frequency with variations to provide a desired directional pattern and spurious response attenuation. In one embodiment of the invention such as shown for example in Fig.9, tube 12 is of aluminum material having a diameter of 4.625 inches and a wall thickness of 0.062 inches. The longitudinal dimension of transducer element 20 is approximately 2.0 inches with its outer surface substantially flush with the inner surface of tube 12. The wall thickness of the element 20 is approximately 3/16 inches. Ports 16b, 16c are identical in area and symmetrically located about the element 20; likewise the ports 16a, 16d are identical in area and symmetrically located about element 20. The longitudinal dimension of each of ports 16b, 16c is 0.75 inches and the longitudinal dimension of each of ports 16a, 16d is 1.5 inches. The longitudinal spacing between the longitudinal center of element 20 and the longitudinal center of each of the ports 16b, 16c is approximately 4.525 inches and the longitudinal center to center spacing of ports 16a, 16b and the longitudinal center to center spacing of ports 16c, 16d is approximately 4.205 inches. Phase shift control folded wave baffles 92, 94 are used as shown in Fig. 9 to provide approximately zero phase shift of the internal wave between ports 16a, 16b and zero phase shift between ports 16c, 16d. The longitudinal spacing between each one of the ports 16a, 16d and its respective end 104, 106 is approximately 1.67 inches. The ends 104, 106 are of an aluminum material having a thickness of 0.625 inches. The nominal operating frequency of an array having the above dimensions is approximately nine(9) kHz. The longitudinal spacing of the end ports 16a, 16d from the respective ends 104, 106 is influenced by the acoustical impedance provided by the ends and the resultant standing waves within the tube. In another embodiment, a foam type acoustic material is cemented to the inside surface of the end plates for providing a desired terminating impedance at the tube ends.

The acoustical beam width in the vertical plane is controlled by the number and spacing of ports 16a-16d, the greater the number of ports the narrower the beam in the vertical direction. The suppression of the relative side lobes is controlled by the velocity or amplitude shading ratios and/or the phase shading ratios, in which the ratio of particle velocity at the active element 20 to the particle velocity at each port is as known in the art for the relative velocities at each active element of prior art multielement arrays. The particle velocity at the apertures 16a-16d is controlled by the areas of the port apertures as well as the acoustic transmission path between apertures and by the way element 20 generates the acoustic energy inside tube 12.

Element 20 is shown as comprising a single piezoelectric ring 22 having electrodes in four quadrants but it is understood that element 20 could comprise four separate radially polarized piezoelectric quadrant sectors each having an electrode pair or any number of sections and electrode pairs for a desired result.

Tube 12 may be open ended at either or both ends. If the end acoustical wave impedance is substantially matched to the tube wave impedance, there will be a minimum of reflected and standing waves. Baffles 92, 94 in this type of configuration would also be useful in providing a desired phase shift at the ports.

Referring to Fig.6A tube 12 has annular ports 17a, 17b,17c, 17d corresponding to and similar in construction and function to ports 16a, 16b, 16c, 16c respectively in the embodiment of Figs.1-4. Acoustically transmissive membranes 19a, 19b, 19c, 19d are sealed to tube 12 at the edges of ports 17a, 17b, 17c, 17d respectively to prevent any flow of internal transmission medium 15 therethrough and seal medium 15 inside tube 12. Medium 15 is selected for its acoustic wave velocity property, which affects the wavelength and phase shift at a given frequency. Medium 15 may be silicone oil or other material having desired acoustic properties. Wavelength varies directly as wave velocity, and for a given port 17a-17d spacing, varying the relative wave velocity will correspondingly vary the phase shift of the internal wave at the ports.

The phase shift of the internal wave at the ports can also be varied by varying the effective wave path length in tube 12. By providing a folded acoustic internal path the path length is increased without increasing tube 12 length. Also, by using a folded acoustic path, the physical, or actual, longitudinal spacing between each of the ports 16a-16d and surface 30 of transducer element 20 can be accordingly chosen to provide a desired vertical directivity pattern and reduce side lobes 90, such as shown in Fig. 8, as is known in the art for the relative spacings between active elements of prior art multielement arrays. Reducing side lobes generally increases the acoustic intensity of the broadside main lobe 84 and minimizes spurious signal response caused by wave reflections from the water surface or sea bed.

One manner of obtaining a folded internal acoustic path between surface 32 of element 20 and selected ports is to use a folded acoustic wave guide baffle internally of tube 12. Referring to Fig. 9, tube 12 is provided with an upper baffle 92, and a lower baffle 94. Baffle 92 is located between ports 16a, 16b while baffle 94 is located between ports 16c, 16d. Baffles 92, 94 are of similar construction and have blocking rims 96, 98 respectively affixed to the inner walls of portions 12a, 12b respectively. Cylindrical tubular chimneys 100, 102 are affixed at their inner ends to rims 96, 98 respectively and are coaxial with tube 12. Chimney 100 extends longitudinally beyond port 16a and is directed towards end termination wall 104. Chimney 102 extends beyond port 16d and is directed towards end termination wall 106. Thus, direct acoustical communication between surface 32 of element 20 and ports 16a, 16d or between port pairs 16a, 16b and 16c, 16d is blocked by baffles 92, 94 respectively. However, acoustical wave communication therebetween is provided by the resulting folded acoustic paths 89a, 89b. In addition acoustic wave reflection from end walls 104, 106 respectively can also be provided to attain desired phase at the ports 16a, 16d. Thus the effective wave path length is increased without an increase of the actual physical spacing between the ports and wave phase at ports 16a, 16d may be adjusted by corresponding placement of ends 104, 106 in tube portions 12a, 12b respectively and by the actual length of the folded paths 89a, 89b. Folded path length is of course a function of the longitudinal dimension of chimneys 100, 102. Use of baffles 92, 94 provides for a shorter overall tube 12 length and closer physical spacing between the ports 16a-16d to achieve the desired end or side lobe suppression and vertical directivity. Baffles 92, 94 are not limited to use between the ports shown but may be used between any desired ports to provide the proper acoustic wave phase shift between the ports and/or between any of the ports and surface 32 of the transducer element 20.

Preferably, baffles 92, 94 are symmetrically longitudinally spaced from element 20, although non-symmetrical spacing may be used to achieve particular phase conditions at particular ports. Baffles 92, 94 are preferably acoustically non-transmissive and may be constructed of a sandwich of two rigid layers such as layers 108, 110, Fig.12, about an intermediate pressure release layer 112 of an air entrapped material or mesh. For baffles 92, 94 layers 108, 110 may be of brass shim stock and layer 112 may be of a foam plastic. Further, chimneys 100, 102 may be collapsible bellows or telescopic in construction to accomodate a pre-deployment, condition of the transducer array 10, later described.

Phase and amplitude may also be adjusted by adjusting the acoustical surface impedance of reflecting surfaces of end walls 104, 106. Referring to Fig. 9, end walls 104, 105 act as reflection surfaces for acoustical wave travel between surface 32 and ports 16a, 16 d respectively. The acoustical properties of end walls 104, 106 affect wave transmission through the end walls 104, 106 and the internal standing wave by the acoustical impedance presented to the cylindrical tube 12 wave which determines the amount of wave reflection and wave absorption or attenuation. The material for end walls 104, 106 is chosen to obtain the desired impedances. Also, end walls 104, 106 while shown logitudinally symmetrically placed from surface 32 may be nonsymmetrically positioned for desired acoustical patterning. It is noted that while tube 12 is shown with end walls 104, 106, a tube with open ends is also usable with the teaching of this invention.

This invention also provides a baffle construction for improving the coupling between the transducer element 20 and the internal transmission medium. Referring to Figs. 10 and 11, cavity baffle 114 is mounted in the cavity or central space defined by the inner walls of transducer element 20. Cavity baffle 114 has center axis 116 and radially extending partitions 118, 120, 122, 124 all of which extend towards but are separated from direct contact with the inner wall 32 of ring 22. The respective ends of the extending partitions may be affixed to the inner wall using a resilient material such as for example a polyurenthane. It is desired that the ends of the partitions be acoustically isolated from the ring to prevent transmission of acoustic vibrations between the ring and the extending partitions. Other materials, methods and structures of affixing the cavity baffle 114 to the inside of transducer element 20 may be used. Partition 118 is between electrodes 52, 54; partition 120 is between electrodes 54, 50; partition 122 is between electrodes 50, 56; and partition 124 is between electrodes 56, 52. In general, where sine and cosine like horizontal field patterns are desired, the number of partitions is equal to the number of electrode pairs such as is shown in Fig. 10. Likewise a cavity baffle can be used with other configurations of the transducer element 20, such as, for example, element 280 shown in Fig. 23.

In any case of the transducer element 20 providing horizontal directional patterns such as shown in Fig. 7, the diametral partitions would lie along or be positioned on diametral lines intermediate the X, Y axes. In a transducer array in accordance with this invention having a transducrer element for providing a single sine or cosine like pattern, such as for example the cosine pattern 76 of Fig. 7, a single partition can be used extending diametrically along the Y axis. Likewise, for the sine pattern response 78, the partition would lie along the X axis. In general, the partition or partitions of the baffle are positioned to lie along axes which intersect the theoretical and major minimum response points of the directional pattern or patterns. The partitions are coextensive longitudinally of element 20 to prevent direct transverse or chordal acoustical communication between one partitioned portion and another in the longitudinal or axial confines of element 20. The ends of baffle 114 are open to provide substantially unobstructed acoustic wave travel longitudinally of tube 12.

Cavity baffle 114 increases the effective pressure gradient to ceramic ring 22 of element 20 when the acoustic signal pressure of the ring cavity or central opening is utilized in the actuation of the ring, as it would be in the receiving mode. Baffle 114 also raises the resonant frequency of the cavity within ring 22 of element 20. Baffle 114 improves acoustic sine like and cosine like wave directivity in the horizontal plane. The partitions of baffle 114 have a low acoustic transmission and are of a construction as described and shown in Fig. 12; layers 108, 110 may be of aluminum and layer 112 may be of an air containment screen mesh.

A more accurate determination of the acoustic path length involves the solution of the equations known in the art and treated for example in the previously cited text references for the acoustic wave in the tube with various boundary conditions. These boundary conditions include velocity of the inside wall 32 of the element 20, dimensions of the element 20 cavity, acoustic impedance of tube 12 at the interface of the element 20 cavity, and the acoustic impedance of tube 12 at each longitudinal port location which impedance is in turn a function of the radiation impedance of the port and the acoustic impedance of the tube extending beyond the port. In general, matching the impedance of element 20 to tube portions 12a, 12b will result in more efficient transfer of the acoustic wave energy. Boundary conditions will vary depending on the manner in which element 20 is mounted to tube 12. Also, adverse vibration transfer between tube 12 and element 20 degrade wave pattern directivity. Mounting of tube 12 to element 20 should isolate vibrations from one another and prevent cross coupling of mechanical vibrations.

Referring now to Figs. 13-16, elongated tube 142 has upper elongated portion 144 and lower elongated portion 146. Annular ports 148, 150 are formed in portion 144 and annular ports 152, 154 are formed in portion 146. Arcuately spaced longitudinal ribs 156 are positioned in ports 148-154 for tube support. Portions 144, 146 correspond to portions 12a, 12b, respectively; ports 148, 150, 152, 154 correspond to ports 16a, 16b, 16c, 16d, respectively: and ribs 156 correspond to ribs 18. Corresponding members are similar in construction and function.

A hollow cylindrical collar 158 has annular port 160 with arcurately spaced longitudinal ribs 161 formed therein. Transducer element 20, previously described, is positioned within the pocket formed inside collar 158 and is secured therein by retaining ring 162 inserted in the lower end of collar 158. Upper and lower ring gaskets 159a, 159b respectively are of a suitable material such as Corprene"or rubber to provide acoustic isolation of the element 20 from collar 158 and retaining ring 162. Collar 158, ring 162 may be of any suitable material such as metal or plastic. Transducer element 20 is of course protected from its operating environment by a protective coating or encapsulation not shown. Collar 158 has upper annular flange 164 and lower annular flange 166 extending from the upper and lower ends, respectively thereof. Tube portion 144 seats securely inside flange 164 and portion 146 seats securely inside flange 166. Attachment of the retaining ring 162 to collar 158 and the collar 158 to the upper and lower portions of tube 142 may be by any suitable fastening ans such as an adhesive, machine screws, or rivets, not shown.

The embodiment in Figs. 13-16 operates in a manner similar to that for the embodiment of Figs. 1-6. Baffles 92, 94 and 114 may also be utilized for their purposes and advantages in the embodiment of Figs.13-16. End walls 104, 106 may be placed in portions 144, 146 in a manner to obtain the desired wave amplitude and phase shift adjustment for the internal wave, as previously described.

Referring to Figs.17-20A, an embodiment is shown in both pre-deployed and deployed states. Transducer array 172 corresponds to array 10 in the embodiment of Figs. 1-6 and in the Fig. 17 cross section the ports are not shown. Transducer tube 176 is telescoped over electronics canister 170 in a pre-deployed state. Fig. 17, prior to use to conserve space and provide transducer protection in packaging, shipment and storage and then extend the transducer to the deployed state, Figs. 18, 19, when in use.

Elongated cylindrical canister 170 houses the electronics package which is coupled to leads 58-72, not shown in Figs. 17-20A, of element 20 via cable 194 to receive electrical signals from and/or transmit electrical signals to element 20 depending on whether transducer array 172 is in a receiving or transmitting mode, respectively. Signal cable 174 extends from the upper end of canister 170 to transmit and/or receive electrical signals to a surface to transmit and/or receive electrical signals to a surface floated electronic canister, not shown, which normally contains a radio frequency transmitter or transceiver and associated antenna. Cable 174 can also comprise a suspension cable for suspending the deployed transducer array 172 in the water. Element 20 has baffle 114 inserted therein in a manner and for purposes as previously described.

Electronics canister 170 has annular guide flanges 184, 188 extending outwardly from the canister 170 spaced from the upper and at the lower ends of the canister respectively. Annular flange 188 is slidable along the inner wall of tube 176 during transistion between the pre-deployed and deployed states. Tube 176 has inner annular flange 178 at its upper end and is slidable along the outer wall of can canister 170 during transition between the pre-deployed and deployed status. The coaction of flange 178 with flanges 184, 188 limit relative longitudinal travel of canister 170 within tube 176. In the pre-deployed state, flange 184 seats against flange 178 and limits further travel of canister 170 into tube 176 and provides space between the bottom of tube 176 and bottom end of canister 170 for storage of transducer 20, signal cable 194, and transducer element 20 suspension cables 196. In the deployed state flange 188 seats against flange 178 and limits any further withdrawal of canister 170 from tube 176. Cylindrical tube 176 has an end termination wall 180 at its lower end. Acoustic wave impedance disk 182 is affixed to and coextensive with inner side of wall 180. Lower end 190 of canister 170 is provided on its lower surface with an acoustic wave impedance disk 192. In the deployed state, the impedance of the combination of end 180 and 182 and the combination of end 190 and disk 192 function similar to ends 106 and 104 respectively as previously described and shown in Fig.9. Disks 182, 192 provide impedance terminations of the ported tube 176 of the transducer array 172.

Electrode leads 58-72 are connected to canister 170 in flexible cable 194. Element 20 is suspended from canister 170 end wall 190 by a plurality of flexible cords 196, the lower ends of which are molded in encapsulating material 24 or otherwise attached to element 20. The upper ends of cords 196 are secured to wall 190 by suitable means. Cable 194 and cords 196 are collapsed in the pre-deployed state. Cords 196 are extended to their full length in the deployed state, and are of a length to position element 20 opposite annular port 198 formed in tube 176. Longitudinally spaced annular ports 200, 204, 206, which correspond to ports 16a, 16b, 16c, 16d, respectively, are formed in tube 176, each port having longitudinal supporting ribs 208, which correspond to ribs 18, formed therein. Corresponding parts are similar in construction and function. It should be undersrood that the transducer array of the present invention need not be attached to or suspended from an electronics canister such as is shown herein but may if desired be otherwise suspended from available and appropriate types of surface or sub-surface members.

Referring to Figs. 20, 20A, annular end shields 210, 212 are of a pressure release material such as an air entrapped material or mesh and are placed over and under the upper and lower ends respectively of ring 22, and function to reduce acoustic radiation from the ends of ring 22 into tube 176.

Flat support annuli 214, 216 are placed above and below, respectively, shields 210, 212 and retaining annuli 218, 220 are secured as by bolts 222 to support annuli 214, 216 respectively. The outer perimeters of retaining annuli 218, 220 extend radially beyong the outer wall of material 24 and abut resilient, acoustic isolator rings 224, 226, respectively. Rings 224, 226 are affixed as by cementing such as with epoxy to the annuli 218, 220, respectively, and may be of Corprene" material, rubber, or other resilient material and act as acoustic seals to prevent an acoustic leakage path between the outer surface of element 20 and the interior of tube 176. Rings 224, 226 may also comprise suitable "O" rings fitted in annular grooves (not shown) in the retaining annuli 218, 220.

In the operation of the embodiment of Figs.17-20, transducer array 172 is deployed from the pre-deployment state of Fig. 17 by the sliding of tube 176 downwardly on canister 170 until flanges 178, 188 seat. Element 20 slides within tube 176 until cords 196 are taut, at which time element 20 is opposite port 198. The electroacoustic transducer operation is as described for previous embodiments. Baffles 92, 94 may be positioned in tube 176 above and below element 20, respectively and are preferably of the kind that have collapsible or telescopic chimneys 100, 102 so that in the pre-deployed state the profile of canister 170 and transducer 172 has a minimum longitudinal dimension and upon deployment, the chimneys 100, 102 extend to their full longitudinal dimension. The deployment may be manually or automatically accomplished as is known in the art. Baffles 92, 94 are preferably suspended by flexible cords similar to cords 196 and be of a length to position baffles 92, 94 in their proper relation to ports 200-206 to obtain the desired length of wave travel in tube 176. Suitable baffle plates such as plates 304, 306, 308 as hereafter described in relation to Figs. 25 - 27 may also be used in lieu of chimney baffles 92, 94 and can likewise be suspended by flexible cords similar to cords 196 of suitable lengths to position the plates in proper locational relationship to the ports 200-206 for providing desired length of internal wave travel between the ports and thus provide proper internal phase shift.

Referring to Fig. 21, a further electroacoustic transducer element 280 is shown. Element 280 may be used in place of element 20 in previously described embodiments of this invention. Element 280 is a cylindrical ring composed of arcuate segments 282 of electroacoustic or piezoelectric material, such as that previously described for ring 22. Each segment 282 is polarized in a tangential direction so that one circumferential edge 282a is a positive pole and the opposite circumferential edge 282b is negative so that expansion and contractions in a circumferential direction reciprocally convert to electrical signals. Segments 282 are electrically coupled and adhered at their opposite circumferentially spaced vertical edges 282a, 282b to a thin conductive electrode 284, 286 respectively. Each electrode 284 is coupled to the positive pole edges 282a of two adjacent segments 282 and each electrode 286 is coupled to the negative pole edges 282b of two adjacent segments 282. Although the transducer element 280 as shown in Fig. 21 is interchangeable with and can provide the same type sine and cosine like and omnidirectional patterns as the previously described element 20, the configuration shown in Fig. 21 can be made capable of operating at greater acoustic power levels and in such instance may be preferred when the transducer array is to be used for transmitting acoustic signals. An example of the latter would be the use of the transducer array in an active type sonobuoy system where an acoustic signal is first transmitted and radiated in an omnidirectional pattern after which the sonobuoy is switched to a receive mode using the horizontal directional properties of the array to determine the relative direction of any resultant acoustic energy reflected and received from distant objects.

Connection of electrodes 284, 286 may be made to obtain the omnidirectional, sine, cosine, or other desired patterns. Connecting electrodes 284 to a first common lead and electrodes 286 to a second common lead will provide an omnidirectional pattern. Connecting the leads from electrodes in opposite quadrants as previousiy described will produce sine and cosine patterns. Element 280 could be mounted in the ported tubes of the previous embodiments in the manner of mounting element 20, the interior surface 288 communicating with the internal medium in the tube and the external surface 290 of element 280 communicating with the external transmission medium.

Referring to Fig. 22, a phased transducer array 300 is shown in longitudinal section and is similar to array 10 shows in Figs. 1-4 except that tube 12 has three sections 12c, 12d, 12e and two electroacoustic elements 20a, 20b are mounted therein.

Element 20a is mounted between sections 12c, 12d (in port 16b) and element 20b is mounted between sections 12d, 12e (in port 16c). Each element 20a, 20b may be of the same cylindrical construction as previously described and such as for example shown in Fig. 10 and may be mounted between their respective tube sections in similar manner to element 20 construction and manner of mounting between tube sections 12a, 12b in array 10. Port 27 is formed in section 12d in the manner that ports 16a-16d are formed in their respective tube sections in array 10 with ribs 18 being configured and positioned as described for ports 16a-16d. Ports 16a-16d in array 10 (Fig.1), 300 (Fig.22) are similar. Ports 16a, 27, 16d in array 300 effectively act as active transducer elements and the longitudinal or axial physical spacing between port 16a and element 20a in port 16b is approximately one half wavelength of a nominal wave in the frequency band of operation for array 300. Similarly, port 16d is physically spaced longitudinally one half wavelength below element 20b and port 27 is physically spaced longitudinally between elements 20a, 20b and approximately one half wavelength from each of them. In this embodiment internal phase shift control members are not necessary to obtain the desired reinforcement at ports 16a, 27, 16d since the ports are each already at the desired spacing for reinforcing and wave pattern shaping. Further, elements 20a, 20b are at one wavelength spacing from one another and therefore are mutually reinforcing at port 27. Additional ports and elements may be added at one half wavelength longitudinal spacing in port-element alternating relation.

Referring to Figs. 23-25 another internal phase shift control member 302 is shown and described in connection with array 10 shown in Figs.1-3. Mounted in tube section 12a of array 10, shown in partial section in Fig. 23, member 302 comprises three circular perforated longitudinally spaced baffles or plates 304, 306, 308 shown positioned between ports 16a, 16b. Plates 304, 306 are similar in construction to one another and are fixedly spaced longitudinally in tubular cylinder 310 the outer surface of which is affixed as by cementing to the inner wall of section 12a. Plates 304, 306, 308 are each longitudinally spaced from the next adjacent plate by approximately one eighth wavelength of a nominal frequency in the frequency band for which array 10 is designed. Plates 304, 306, 308 are cemented as with epoxy cement or otherwise firmly affixed at their peripheries to the inner wall of cylinder 310. Alternatively, plates 304, 306, 308 could be firmly affixed at their respective peripheral edges to the inner wall surface of tube section 12a as with epoxy cement. It is important that mounting of plates 304, 306, 308 be such as to minimize plate vibration. Other manners of affixing plates 304, 306, 308 in place may be utilized. It is understood a phase shift control member similar to member 302 is mounted in similar manner between ports 16c, 16d of tube section 12b as shown in Fig. 23A. In one embodiment of the phase control member 302, the baffle plates 304, 306 and 308 were made from perforated aluminum having a hole size of 0.062 inches and an open to closed ratio of approximately 40% at a nominal operating frequency of nine (9) kHz.

Referring to Fig. 23A, an embodiment is shown wherein an array 10, similar to that shown in Figs. 1-5, has a phase shift control member 302 mounted between ports 16a, 16b, and phase shift control member 302a mounted between ports 16c, 16d. Member 302a has plates 304a, 306a, 308a mounted in cylinder 310a and are similar in construction and operation to member 302, plates 304, 306, 308, and cylinder 310 respectively.

Referring to Figs.24, 25 plate 304 will be described. The longitudinal spacing of the plates may vary depending on the hole 312 diameter, the number of plates, the number of holes on each of plates 304, 306, 308, the hole total area on each plate, but the longitudinal plate spacing is preferably not greater than one eighth wavelength of the aforementioned nominal frequency.

Member 302 functions to maintain a minimal or substantially reduced phase shift of an acoustical wave between its longitudinal ends. A lesser or greater number of plates 304, 306, 308 may be used in member 302.

Phase shift control member 302 controls the phase between ports 16a, 16b of transducer tube 12. In particular, member 302 produces a low or minimum phase shift in the acoustic wave as the wave propagates along the axis of tube 12. The phase is thus controlled locally, as by member 302, along the length of the acoustically distributed - parameter tube 12, which can be considered to be an acoustical transmission line. Without a phase control member for local phase shift control, the acoustical wave would be controlled by the distributed nature of the tube and a phase shift would occur along a short length of the tube. The phase is controlled as by member 302 along the length of the tube between pertinent adjacent ports to satisfy the relative phase required of the waves which radiate from these adjacent ports. The relative phase is determined from requirements to obtain the desired vertical directivity pattern.

In member 302, spaced plates 304, 306, 308 each have holes 312 and are used to form a low pass acoustic filter having a cut off frequency. When the frequency of the internal wave in the transducer tube 12 is substantially below the cut off frequency of the low pass filter, only a small or minimum phase shift of the acoustical wave which passes through member 302 occurs and the wave is attenuated only a small or minimum amount. As will be understood by those in the art, a zeo degree (o°) phase shift is equivalent to a 360° phase shift. To the extent that member 302 does not shift the phase of the acoustical wave a full 360° an additional phase shift may be added to the wave to attain the 360° shift with other means such as additional transmission path length.

Each plate 304, 306, 308 of filter 302 is mounted transversely to the axis of the transducer tube 12. The holes 312 in each plate 304, 306, 308 become acoustical masses which are in parallel with each other in an equivalent circuit configuration. Chamber 306 created between adjacent plates 305, 308 each forms an acoustical compliance or stiffness.

The overall acoustical mass created by the holes 312 in each plate 304, 306, 308 acts in series with the acoustical wave traveling along the axis of the tube 12. The compliant chambers 305, 307 between adjacent plates each forms a compliant reactance to "acoustical ground". The final plate in the direction of wave propagation is terminated by the acoustical impedance of the remaining length of the tube 12. An equivalent acoustical circuit is a ladder network that has the acoustical masses and compliant chambers as circuit elements which define a cut off frequency for the low pass filter structure.

The filter may be designed so that the cut off frequency is sufficiently above the operating acoustical wave frequency of the transducer 10. The low phase shift across filter 302 results because of this property of the low pass filter below cut off and because the acoustical energies in the masses and compliances act like lumped circuit elements. Thus the energy in the acoustical wave is passed along the structure with low phase shift.

The spacing between adjacent plates 304, 306, 308 and therefore the dimensions of the compliant cavities 305, 307 is designed to be substantially less than a wave length of a nominal operating frequency of sound in the internal transmission medium 15 in tube 12, and is typically an eighth-wavelength or less, so that each compliant chamber 305, 307 can be considered to be a lumped element. Also, the holes 312 in the perforated metal plates 304, 306, 308 are designed to have the correct acoustical mass to provide the desired cut off frequency, yet not be too small to have an appreciable acoustical resistance. In other words, the mass reactance of the holes 312 should predominate over the resistive component of the impedance of the plates 304, 306, 308.

The number of plates 304, 306, 308 required depends upon the length of the tube 12 over which a minimal amount of phase shift is desired for the internal acoustical wave. For example, a longer section of tube 12 in which phase shift control is desired, requires more plates 304, 306, 308 to satisfy the eighth-wavelength, or less, criterion to preserve the lumped element consideration for the compliant chambers 305, 307. As the number of plates changes, the size of the holes 312 in each plate changes to maintain the same cut off frequency relative to the operating frequency of the transducer 10.

The low pass filter is a useful structure for the tube 12 (acoustical transmission line) to control phase of the internal wave at a particular location along an otherwise distributed parameter acoustical "transmission line" tube 12.

The filter structure 302 also provides some isolation between sections of the tube 12 to avoid any adverse internal interactions of adjacent ports 16a-16d. The filter 302 is easily packaged by collapsing its structure and is easily deployed in an inverse mechanical manner. For a discussion of filter theory of. "Electromechanical Transdurcers and Wave filters" by Warren P. Mason, Second Edition, D. Van Nostrand Co.Inc., Princeton N.J.

Factors affecting the performance of array 10 include the number, spacing, and symmetry of the ports 16a-16d, the relative acoustical properties of the internal medium 15 and the external medium 17, the width of struts 18 in the circumferential direction, the end terminations of tube 12; the number, placement and dimensions of baffles 92, 94; and the number, spacing, hole size, and hole area of the plates in baffle member 302.

Modifications that can be employed with the teaching of this invention include variations in placement and orientation of ribs in their respective port apertures; the number and placement of ports 16a-16d and number and placement of elements 20; the type and placement of phase shift control baffles 92, 94, 302; the manner of mounting element 20 and baffles 92, 94, 114, 302 to their respective tube or element walls; the number, configuration, placement, and manner of mounting the electrodes on ring 22; materials for tube 12, ends 14a, 14b and baffles 92, 94, 114, 302; the properties of internal medium 15, and in the manner of processing the electrical signals to and from element 20 to obtain the desired pattern in the horizontal plane. Also, instead of making ring 22 entirely of a piezoelectric material, this invention embraces the use of a cylinder of metal, plastic or other relatively inexpensive support material to which are affixed arcuate sections of piezoelectric transducer material at those areas on the inside and/or outside surfaces of such cylinder that obtain the desired pattern and responses. In this manner, a relatively low cost transducer 20 is provided.

Numerous other changes, modifications, and adaptations of the disclosed invention can be made by those having ordinary skill in the art without departing from the invention according to the claims. It is intended that such changes, changes, modifications, and adaptations of the invention will be within the scope of the following appended claims.

## Claims

1. Transducer apparatus for a received or transmitted acoustical wave in an external transmission medium (17) comprising:

   electroacoustic transducer means (20) for converting between acoustic and electrical signals;

   said transducer means having first and second vibratile surfaces (30, 32);

   tube means (12) having first and second ends, an end to end axis (Z), and an acoustical interior passage (15), said tube means for supporting said transducer means (20) so that said first surface (30) is acoustically coupled to the external transmission medium and said second surface (32) is acoustically coupled to said interior passage;

   port means being formed (16a, 16d) in said tube means for conducting acoustical waves between said interior passage and said external transmission medium (17); characterised in that

   said port means comprises a pair of ports (16a, 16d), a first port (16a) in said pair of ports being spaced a predetermined distance in a first axial direction from said transducer means (20) and a second port (16d) in said pair of ports being spaced a predetermined distance in a second axial direction different from said first direction; said predetermined distances being determined so that within a frequency band of transducer operation a reinforcing combination of acoustic radiation in a direction broadside said longitudinal axis from said pair of ports and the radiation from said vibratile transducer element first surface is provided whereby a maximum radiation of acoustic waves or a maximum response to acoustic waves in the external liquid transmission medium (17) occurs broadside said axis.

2. The apparatus of claim 1, wherein the transducer means is a cylindrical phased array transducer for transmitting or receiving acoustic waves in said external liquid transmission medium (17), comprising:

   a first electroacoustic transducer element (20) having at least first and second vibratile surfaces (30,32) capable of radiating and responding to acoustic waves in a transmission medium coupled respectively thereto; said tube means comprising an elongated cylindrical tube (12a) and a cylindrical wall and a plurality of a pair of first and second substantially annular acoustic ports (16a,16b) in said wall; said tube adapted to be filled internally with an internal acoustic transmission medium to provide said interior acoustical passage for providing acoustic transmission paths between said second vibratile surface (32) and said pair of annular ports, said ports providing acoustic coupling between the external liquid transmission medium (17) and said internal transmission medium (15);

first means (24) for supporting said transducer element relative to said cylindrical tube in a position along said longitudinal axis spaced from each port of said pair of ports by said predetermined distance and for acoustically coupling said first vibratile surface of said transducer element with the external liquid medium, to define the effective acoustic length of said transmission paths.

3. The apparatus of Claim 2 including a second electroacoustic transducer element (20b), said first and second element (20a,20b) each having first and second vibratile surfaces and each element being supported in said tube (12) so that said first surfaces (30) are acoustically coupled to said external transmission medium (17) and said second surfaces (32) are acoustically coupled to said internal medium (15);

a third substantially annular port being in said tube so that said second port is between said first and third ports;

said first element being positioned at an axial position between said first and second ports;

second means (24) for supporting and axially positioning said second element (20b) relative said tube between said second and third ports (Fig 22).

4. The apparatus of Claim 2 or 3, wherein each said transducer element (20) is for controlling a pattern of radiation of, or response to, acoustical waves in a plane substantially perpendicular to said axis (Z) and said ports (16a,16b) are for aiding in controlling the pattern of radiation of, or response to, acoustical waves in a plane containing said axis.

5. The apparatus of Claims 3 or 4 wherein each said transducer element is for generating a sine like and/or cosine like broadside pattern and said ports (16a,16b) are for providing a control factor in determining the dimension of said broadside pattern parallel to said axis.

6. The apparatus of Claim 5, wherein each said transducer element comprises a piezoelectric ring (22) having inner and outer surfaces; said first vibratile surface comprising said ring outer surface and said second vibratile surface comprising said ring inner surface; said ring having four circumferential quadrants; said ring having an electrode pair (44,52) in each of said four quadrants; one electrode (44) in each pair being conductively affixed to said ring outer surface and the other electrode (52) in each pair being conductively affixed to said ring inner surface.

7. The apparatus of Claim 2 wherein each of said ports is spaced from said transducer element second vibratile surface a distance to provide a travel in said interior passage of approximately one half wavelength of a predetermined frequency(Fig 22).

8. The apparatus of Claim 3 including a second pair of annular ports (16b,16c); a first port (16b) in said second pair of ports being axially spaced in a first axial direction (Z) from said first port (16a) in said first pair of ports and a second port (16c) in said second pair of ports being axially spaced in a second axial direction (-Z) opposite to said first axial direction from said second port (16d) in said first pair of ports.

9. The apparatus of Claim 8 wherein said ports are symmetrically spaced from said transducer element.

10. The apparatus of Claim 8 wherein each of said ports in said first pair of ports has a first port aperture; each of said ports in said second pair of ports has a second port aperture; said first port aperture being smaller in area than said second port aperture; said first port aperture being smaller in area than said first vibratile surface.

11. The apparatus of claims 2 or 3, wherein each said transducer element comprises an electroacoustic transducer ring having inner and outer surfaces, said inner surface defining a ring cavity; said first vibratile surface comprising said ring inner surface;

cavity baffle (118,120) means being placed in said ring cavity (114) for improving the wave pressure gradient to the inner surface of said ring of said transducer element.

12. The apparatus of Claims 2, 3, 4, or 8 including phase shift means (92,94) for shifting the phase at said ports of acoustical waves in said interior passage to vary said pattern of radiation of, or response to, acoustic waves.

13. The apparatus of Claim 12 wherein said phase shift means comprises a folded wave baffle means (92,94) inserted in said interior passage for folding acoustical waves in their path between said second surface and said ports to increase the path length in said internal medium whereby the acoustical wave phase is correspondingly shifted at said ports.

14. The apparatus of Claim 13 wherein said first and second axial ends of said tube are closed and said phase shift means includes a reflecting surface (104,106) on at least one of said closed ends in said interior passage; said baffle means for causing acoustical waves in said interior passage to be reflected from said reflecting surface.

15. The apparatus of Claim 3 wherein each of said ports is spaced from the nearer said transducer element second vibratile surface a distance to provide a travel in said interior passage of approximately one half wavelength of an acoustical wave of nominal frequency in the operational frequency band of the transducer.

16. The apparatus of Claim 10 wherein the axial spacing of said parts from said transducer element second surface provides along said path between each of said ports and said second surface of approximately one half wavelength of a predetermined wave frequency; each of said ports in said second pair of ports being axially spaced from said transducer element second surface to provide an acoustical travel length along said second path between each of said ports in said second pair of ports and said second surface of approximately one and one half wavelength of said predetermined wave frequency.

17. The apparatus of Claim 5 wherein said tube comprises a plurality of tube sections, a tube section (12b) being between adjacent ports; said transducer element (20) comprises a right cylindrical ring of piezoelectric material supported in fixed relation to said tube; the outer surface (30) of said ring comprising said transducer element first vibratile surface and the inner surface (32) of said ring comprising said transducer element second vibratile surface;
a plurality of longitudinal ribs (18) spaced in equal arcuate increments about each port to support in fixed relation the tube portions on either side of each of said ports.

18. The apparatus of Claim 17 wherein said tube (12) comprises first (12a) and second (12b) sections; said first section being concentric with and contiguous to a first longitudinal end of said ring and said second section being concentric with and contiguous to a second longitudinal end of said ring;
a first cylindrical bracket (26) being affixed to said first section and said first end of said ring; a second cylindrical bracket (26) being affixed to said second section and said second end of said ring.

19. The apparatus of Claims 2 or 3 including encapsulation means (24) for encapsulating each said transducer element for protection from the transducer element environment.

20. The apparatus of Claim 17, wherein said tube (12) comprises first (12a) and second (12b) concentric longitudinal sections each having first and second axial ends;
a cylindrical collar (158) concentric with said tube being affixed at a first of its axial ends to an axial end of said first tube section and affixed at the second of its axial ends to an axial end of said second tube section;
means (162) for securely supporting said ring in said collar;
said collar (158) having a substantially annular port (160) substantially coextensive with said ring outer surface to provide substantially complete acoustical coupling between said ring outer surface and the external transmission medium.

21. The apparatus of Claim 2 wherein said transducer element has a pre-deployment state and a deployment state; said interior passage being elongated; said first supporting means (196) being adapted for longitudinal movement in said interior passage whereby said transducer element (20) can be stored adjacent said tube (172) second end (180) in a pre-deployment state and can be longitudinally moved by said supporting means (196) to an intermediate position and supported by said supporting means intermediately of said interior passage in a deployment state.

22. The apparatus of Claim 21 including an elongated canister (170) mounted for sliding telescopic movement into and out of said tube (172) first end (172), said canister being slidable into said interior passage towards said second end (180) in a pre-deployment state and slidable out of said first end away from said second end in a deployment state; said supporting means (196) being flexible and being connected to said canister (170) whereby as said canister is moved out of said passage, said supporting means become taut and said transducer element (20) is moved to and supported at said intermediate position in said passage.

23. The apparatus of Claim 11 wherein said ring has a plurality of arcuately spaced electrodes (52,54,56,50) affixed to said inner surface (32); said cavity baffle means comprises partition means (114) positioned relative said ring inner surface to partition and isolate in chordal directions at least one of said electrodes from the other electrodes and provide a substantially acoustically unobstructed longitudinal path between said electrodes and said ports in said interior passage.

24. The apparatus of Claim 23 wherein said partition means (118,120,122,124) is for partitioning and isolating in chordal directions each of said electrodes from each of the other electrodes.

25. The apparatus of Claims 23 or 24 wherein each partition comprises two substantially rigid outer layers (108,110) separated by an intermediate pressure release layer (112) for reducing acoustical wave transmission.

26. The apparatus of Claim 23 wherein there are four electrodes (50,52,54,56), each electrode covering substantially one quadrant of said inner surface (32); said partition (110,120,122,124) having an X-shaped transverse-cross section and having four longitudinal edges parallel to said axis; the partition edges being contiguous with the arcuate spacings between said electrodes.

27. The apparatus of Claim 13 wherein said folded wave baffle means (92,94) comprises a wave guide having a transverse acoustic wave blocking rim (96,98) having inner and outer perimeters and being affixed at its outer perimeter to the inner wall of said interior passage between said second vibratile surface (32) and one of said ports (16a); a duct having first and second open ends being affixed at said duct first end to said inner perimeter and extending beyond said one port and towards said tube first end (104) whereby acoustical wave travel between said second surface and said one port is folded over said second end of said duct.

28. The apparatus of Claim 27 wherein said phase shift means comprises a reflecting surface on at least one of said tube first and second ends (104,106); said baffle means for causing acoustical waves in said interior passage to be reflected from said reflecting surface;

said reflecting surface having an acoustical impedance surface for adjusting the phase and amplitude of acoustical waves reflected therefrom.

29. The apparatus of Claim 12 wherein said phase shift means comprises at least one acoustical wave filter means; said filter means comprising a first perforated plate (304) fitted inside said tube in said interior passage transversely to said axis; said perforations (312) being sufficiently small to present an acoustical mass to an acoustical wave having a nominal frequency in the operational bandwidth of the transducer but sufficiently large to present a relatively small acoustical resistance to said wave so that the mass reactance component of the perforations predominates over the resistive component whereby said plate acts as an acoustical low pass filter having a relatively small phase shift.

30. The apparatus of claim 29 wherein said plate is axially positioned between said transducer element and one of said ports.

31. The apparatus of claim 29 wherein said filter means (302) includes a perforated second plate fitted inside said tube in said interior passage transversely to said axis; said second plate (306) being axially spaced from said first plate (304) a predetermined fraction of a wavelength corresponding to an acoustical wave having a nominal frequency in the transducer operational frequency band to form an acoustically compliant chamber between said plates that provides an acoustical compliance whereby the acoustical energies in said acoustical masses and chamber act like lumped circuit elements.

32. The apparatus of Claim 31 including a perforated third plate (308) fitted inside said tube in said interior passage transversely to said axis; said third plate being axially spaced from said second plate a predetermined fraction of said wavelength whereby said second plate (306) is axially between said first (304) and third plates (308) and axially spaced therefrom by said predetermined fraction, a second acoustically compliant chamber being formed between said second and third plates and acting in the manner of said first chamber.

33. The apparatus of Claims 31 or 32 wherein said predetermined fraction is substantially equal to or less than one eighth of said wavelength.

34. The apparatus of Claim 8 including phase shift means for controlling the phase of acoustical waves in said interior passage;

said phase shift means (302) comprising a first acoustical filter section being between said first ports (16a,16b) in said first and second port pairs; said first filter section comprising first, second, and third axially spaced planar perforated plates (304,306,308) mounted transversely to said axis in said tube, the axial spacing between consecutive plates in said filter section being a predetermined fraction of a wavelength corresponding to An acoustical wave having a nominal frequency in the operational frequency band of said transducer;

a second filter section (302a) identical to said first section; said second filter section being axially positioned between said second ports (16c,16d) in said first and second port pairs;

said perforations (312) in each of said plates being sufficiently small to present a predetermined acoustical mass to an acoustical wave of said wavelength and sufficiently large to present a relatively small acoustical resistance to said wave so that the mass reactance component of the perforations predominates over the resistive component whereby said plate acts as a low pass filter having a relatively small phase shift;

adjacent plates in each of said first and second filter sections forming an acoustically compliant chamber between said adjacent plates that provides an acoustical compliance whereby the acoustical energies in said acoustical masses and chamber act like lumped circuit elements.

35. The apparatus of Claims 29, 30, 31, 32, 33 or 34 wherein each of said perforated plates has a total area of perforations that is approximately 40% of the area defined by the plate perimeter.

36. The apparatus of Claim 2 including at least one additional electroacoustic transducer element (20b); each said additional element having first and second vibratile surfaces; second means (24) for supporting each said additional element relative said tube so that said first surfaces are acoustically coupled to said external transmission medium and said second surfaces are acoustically coupled to said interior passage;

said elements and ports being spaced axially of said tube in an axial order so that a port alternates in axial order with an element.

37. The apparatus of Claim 36 wherein there is a port (16a,16d) at each axial end of said axial order of said elements and ports.

38. The apparatus of Claims 36 or 37 wherein said axial spacing between said elements and ports is approximately one half wavelength of an acoustical wave having a nominal frequency in the operational frequency bandwidth of said transducer.

39. The apparatus of Claim 11 wherein said ring (22) has first and second open ends and an end to end axis; said cavity baffle means (118,120,122,124) comprises a substantially acoustically nontransmissive longitudinally aligned partition for isolating inner wall segments of said ring from one another in a chordal direction in a plane transverse to said axis; said partition being open at its longitudinal ends for acoustical wave travel longitudinally of said partition.

## Revendications

1. Appareil transducteur pour une onde acoustique reçue ou émise dans un milieu de transmission externe (17), comprenant :

un transducteur électroacoustique (20) pour assurer la conversion entre des signaux acoustiques et électriques;

le transducteur comportant une première et une seconde surface pouvant vibrer (30, 32);

un tube (12) comportant une première et une seconde extrémité, un axe (Z) allant d'une extrémité à l'autre et un passage intérieur acoustique (15), le tube étant destiné à supporter le transducteur (20), de sorte que la première surface (30) est couplée acoustiquement au milieu de transmission externe et que la seconde surface (32) est couplée acoustiquement au passage intérieur;

des portes (16a, 16d) étant ménagées dans le tube pour conduire des ondes acoustiques entre le passage intérieur et le milieu de transmission externe (17),

caractérisé en ce que les portes comprennent une paire de portes (16a à 16d), une première porte (16a) de la paire étant espacée du transducteur (20) d'une distance prédéterminée dans un premier sens axial et une seconde porte (16d) de la paire étant espacée d'une distance prédéterminée dans un second sens axial différent du premier; les distances prédéterminées étant choisies telles que, dans une bande de fréquence du fonctionnement du transducteur, on obtienne une combinaison renforçante du rayonnement acoustique dans une direction transversale à l'axe longitudinal à partir de la paire de portes et du rayonnement provenant de la première surface pouvant vibrer du transducteur, pour donner un rayonnement maximum d'ondes acoustiques ou une réponse maximale aux ondes acoustiques dans le milieu de transmission liquide externe (17), transversalement audit axe.

2. Appareil suivant la revendication 1, dans lequel le transducteur est un transducteur à réseau commandé en phase cylindrique destiné à émettre ou à recevoir des ondes acoustiques dans le milieu de transmission liquide externe (17), comprenant :

un premier élément transducteur électroacoustique (20) comportant au moins une première et une seconde surface pouvant vibrer (30, 32) capable de rayonner des ondes acoustiques et de répondre à des ondes acoustiques dans un milieu de transmission qui y est respectivement couplé; le tube comprenant un long tube cylindrique (12a) et une paroi cylindrique, ainsi que plusieurs paires d'une première et d'une seconde porte acoustique en substance annulaire (16a, 16d) dans cette paroi; le tube pouvant être rempli intérieurement d'un milieu de transmission acoustique interne pour former le passage acoustique intérieur destiné à fournir des trajets de transmission acoustique entre la seconde surface pouvant vibrer (32) et la paire de portes annulaires, les portes assurant un couplage acoustique entre le milieu de transmission liquide externe (17) et le milieu de transmission interne (15);

un premier moyen (24) pour supporter le transducteur par rapport au tube cylindrique dans une position le long de l'axe longitudinal qui est espacée de la distance prédéterminée de chaque porte de la paire de portes et pour coupler acoustiquement la première surface pouvant vibrer du transducteur au milieu liquide externe afin de définir la longueur acoustique effective des trajets de transmission.

3. Appareil suivant la revendication 2, comprenant un second élément transducteur électroacoustique (20b), le premier et le second élément (20a, 20b) comportant chacun une première et une seconde surface pouvant vibrer et chaque élément transducteur étant supporté dans le tube (12) de manière telle que les premières surfaces (30) soient couplées acoustiquement au milieu de transmission externe (17) et que les secondes surfaces (32) soient couplées acoustiquement au milieu interne (15); une troisième porte en substance annulaire étant prévue dans le tube de manière telle que la deuxième porte soit située entre la première et la troisième;

le premier élément étant positionné en un endroit axial situé entre la première et la deuxième porte;

un second moyen (24) pour supporter et positionner axialement le second élément (20b) par rapport au tube entre la deuxième et la troisième porte (Fig. 22).

4. Appareil suivant la revendication 2 ou 3, dans lequel chaque élément transducteur (20) est destiné à régir un diagramme de rayonnement acoustique ou de réponse d'ondes acoustiques dans un plan en substance perpendiculaire à l'axe (Z) et les portes (16a, 16b) sont prévues pour aider à régir le diagramme de rayonnement ou de réponse d'ondes acoustiques dans un plan passant par cet axe.

5. Appareil suivant la revendication 3 ou 4, dans lequel chaque élément transducteur est destiné à engendrer un diagramme transversal du type sinusoïdal et/ou cosinusoïdal et les portes (16a, 16b) sont destinées à produire un facteur de commande pour déterminer la dimension du diagramme transversal parallèlement à l'axe.

6. Appareil suivant la revendication 5, dans lequel chaque élément transducteur comprend un anneau piézo-électrique (22) comportant des surfaces interne et externe; la première surface pouvant vibrer comprenant la surface externe de l'anneau et la seconde surface pouvant vibrer comprenant la surface interne de l'anneau; l'anneau présentant quatre quadrants circonférentiels; cet anneau comportant une paire d'électrodes (44, 52) dans chacun des quatre quadrants; une électrode (44) de chaque paire étant fixée de manière conductrice à la surface externe de l'anneau et l'autre électrode (52) de chaque paire étant fixée de manière conductrice à la surface interne de l'anneau.

7. Appareil suivant la revendication 2, dans lequel chacune des portes est espacée de la seconde surface pouvant vibrer de l'élément transducteur d'une distance déterminant un trajet dans le passage intérieur d'environ une demi-longueur d'onde d'une fréquence prédéterminée (Fig. 22).

8. Appareil suivant la revendication 3, comprenant une seconde paire de portes annulaires (16b, 16c); une première porte (16b) de la seconde paire de portes étant espacée axialement, dans un premier sens axial (Z), de la première porte (16a) de la première paire de portes et une seconde porte (16c) de la seconde paire de portes étant espacée axialement, dans un second sens axial (-Z) opposé au premier sens axial, de la seconde porte (16d) de la première paire de portes.

9. Appareil suivant la revendication 8, dans lequel les portes sont espacées symétriquement de l'élément transducteur.

10. Appareil suivant la revendication 8, dans lequel chacune des portes de la première paire de portes présente une première ouverture de porte; chacune des portes de la seconde paire de portes présente une seconde ouverture de porte; la première ouverture de porte étant moins étendue que la seconde; la première ouverture de porte étant moins étendue que la première surface pouvant vibrer.

11. Appareil suivant la revendication 2 ou 3, dans lequel chaque élément transducteur comprend un anneau transducteur électroacoustique comportant des surfaces interne et externe, la surface interne définissant une cavité d'anneau; la première surface pouvant vibrer comprenant la surface interne de l'anneau;

des chicanes de cavité (118, 120) étant placées dans la cavité d'anneau (114) pour améliorer le gradient de pression d'onde par rapport à la surface interne de l'anneau de l'élément transducteur.

12. Appareil suivant la revendication 2, 3, 4 ou 8, comprenant des moyens de déphasage (92, 94) pour décaler, au niveau desdites portes, la phase des ondes acoustiques présentes dans le passage intérieur pour faire varier le diagramme de rayonnement acoustique ou de réponse d'ondes acoustiques.

13. Appareil suivant la revendication 12, dans lequel les moyens de déphasage comprennent des chicanes pliées (92, 94) introduites dans le passage intérieur pour replier les ondes acoustiques dans leur trajet entre la seconde surface et les portes, en vue d'augmenter la longueur du trajet dans le milieu interne, de manière à décaler la phase des ondes acoustiques en correspondance au niveau des portes.

14. Appareil suivant la revendication 13, dans lequel la première et la seconde extrémité axiale du tube sont fermées et les moyens de déphasage comprennent une surface réfléchissante (104, 106) sur au moins une des extrémités fermées dans le passage intérieur; les chicanes étant destinées à provoquer la réflexion par la surface réfléchissante des ondes acoustiques présentes dans le passage intérieur.

15. Appareil suivant la revendication 3, dans lequel chacune des portes est espacée de la seconde surface pouvant vibrer la plus proche de l'élément transducteur, d'une distance déterminant un trajet dans le passage intérieur d'environ une demi-longueur d'onde d'une onde acoustique de fréquence nominale dans la bande de fréquence de fonctionnement du transducteur.

16. Appareil suivant la revendication 10, dans lequel l'espacement axial des portes par rapport à la seconde surface de l'élément transducteur fournit le trajet entre chacune des portes et la seconde surface d'environ une demi-longueur d'onde d'une fréquence d'ondes prédéterminée, chacune des portes de la seconde paire étant espacée axialement de la seconde surface de l'élément transducteur pour fournir une longueur de trajet acoustique le long du second trajet entre chacune des portes de la seconde paire et la seconde surface, d'environ une et demi longueur d'onde de la fréquence d'ondes prédéterminée.

17. Appareil suivant la revendication 5, dans lequel le tube comprend plusieurs sections de tube, une section de tube (12b) étant située entre des portes adjacentes;

l'élément transducteur (20) comprend un anneau cylindrique en matière piézo-électrique supporté dans une position fixe par rapport au tube; la surface externe (30) de l'anneau comprenant la première surface pouvant vibrer de l'élément transducteur et la surface interne (32) de l'anneau comprenant la seconde surface pouvant vibrer de l'élément transducteur;

une pluralité de nervures longitudinales (18) espacées d'incréments arqués égaux autour de chaque porte pour supporter de manière fixe les parties de tube de part et d'autre de chacune des portes.

18. Appareil suivant la revendication 17, dans lequel le tube (12) comprend une première (12a) et une seconde (12b) section; la première section étant concentrique et contiguë à une première extrémité longitudinale de l'anneau et la seconde section étant concentrique et contiguë à une seconde extrémité longitudinale de l'anneau;

un premier support cylindrique (26) étant fixé à la première section et à la première extrémité de l'anneau; un second support cylindrique (26) étant fixé à la seconde section et à la seconde extrémité de l'anneau.

19. Appareil suivant la revendication 2 ou 3, comprenant des moyens d'encapsulation (24) pour encapsuler chaque élément transducteur en vue de le protéger contre son environnement.

20. Appareil suivant la revendication 17, dans lequel le tube (12) comprend une première (12a) et une seconde (12b) section longitudinale concentrique, comportant chacune une première et une seconde extrémité axiale;

une virole cylindrique (158) concentrique au tube étant fixée, à une première de ses extrémités axiales, à une extrémité axiale de la première section de tube et, à la seconde de ces extrémités axiales, à une extrémité axiale de la seconde section de tube;

un moyen (162) pour supporter solidement l'anneau dans la virole;

la virole (158) présentant une porte en substance annulaire (160) qui s'étend en substance sur la même distance que la surface extérieure de l'anneau pour fournir un couplage acoustique en substance complet entre la surface extérieure de l'anneau et le milieu de transmission externe.

21. Appareil suivant la revendication 2, dans lequel l'élément transducteur présente un état antérieur au déploiement et un état déployé; le passage intérieur étant allongé; les premiers moyens de support (196) étant conçus en vue d'un déplacement longitudinal dans le passage intérieur, de sorte que l'élément transducteur (20) peut être rangé à proximité de la seconde extrémité (180) du tube (172) dans un état antérieur au déploiement et peut être déplacé longitudinalement par les moyens de support (196) vers une position intermédiaire et être supporté par les moyens de support, à un endroit intermédiaire du passage intérieur, dans un état déployé.

22. Appareil suivant la revendication 21, comprenant un long étui (170) monté de manière à coulisser télescopiquement dans la première extrémité (178) du tube (172) et hors de celle-ci, l'étui pouvant coulisser dans le passage intérieur en direction de la seconde extrémité (180) dans un état antérieur au déploiement et pouvant coulisser hors de la première extrémité dans un sens s'écartant de la seconde extrémité dans un état déployé; les moyens de support (196) étant flexibles et étant reliés à l'étui (170), de sorte qu'à mesure que l'étui est déplacé vers l'extérieur du passage, les moyens de support se tendent et l'élément transducteur (20) est déplacé vers la position intermédiaire dans le passage et est supporté dans cette position.

23. Appareil suivant la revendication 11, dans lequel l'anneau comporte plusieurs électrodes espacées en arc de cercle (52, 54, 56, 58) fixées à la surface interne (32); la chicane de cavité comprend une cloison (114) positionnée par rapport à la surface interne de l'anneau pour cloisonner et isoler, suivant des cordes, au moins une des électrodes par rapport aux autres électrodes et fournir un trajet longitudinal en substance non obstrué acoustiquement entre les électrodes et les portes dans le passage intérieur.

24. Appareil suivant la revendication 23, dans lequel la cloison (118, 120, 122, 124) est destinée à cloisonner et à isoler, suivant des cordes, chacune des électrodes par rapport aux autres électrodes.

25. Appareil suivant la revendication 23 ou 24, dans lequel chaque cloison comprend deux couches extérieures en substance rigides (108, 110) séparées par une couche de décompression intermédiaire (112) destinée à réduire la transmission des ondes acoustiques.

26. Appareil suivant la revendication 23, dans lequel quatre électrodes (50, 52, 54, 56) sont prévues, chaque électrode couvrant en substance un quadrant de la surface intérieure (32); la cloison (118, 120, 122, 124) présentant une section transversale en X et comportant quatre bords longitudinaux parallèles à l'axe; les bords de la cloison étant contigus aux espacements en arc entre les électrodes.

27. Appareil suivant la revendication 13, dans lequel la chicane d'ondes pliée (92, 94) comprend un guide d'ondes comportant une collerette transversale de blocage des ondes (96, 98) présentant des périmètres intérieur et extérieur et fixée, au niveau de son périmètre extérieur, à la paroi interne du passage intérieur entre la seconde surface pouvant vibrer (32) et une des portes (16a); un conduit comportant une première et une seconde extrémité ouverte étant fixé, au niveau de sa première extrémité, au périmètre intérieur et s'étendant au-delà de la première porte et en direction de la première extrémité (104) du tube, de sorte que le trajet des ondes acoustiques entre la seconde surface et ladite porte est replié par-dessus la seconde extrémité du conduit.

28. Appareil suivant la revendication 27, dans lequel le moyen de déphasage comprend une surface réfléchissante sur au moins une des première et seconde extrémités (104, 106) du tube; la chicane étant prévue pour assurer que les ondes acoustiques présentes dans le passage intérieur soient réfléchies par la surface réfléchissante;

   la surface réfléchissante comportant une surface d'impédance acoustique destinée à ajuster la phase et l'amplitude des ondes acoustiques qu'elle réfléchit.

29. Appareil suivant la revendication 12, dans lequel le moyen de déphasage comprend au moins un filtre d'ondes acoustiques; le filtre comprenant une première plaque perforée (304) installée à l'intérieur du tube, dans le passage intérieur, transversalement à l'axe; les perforations (312) étant suffisamment petites pour présenter une masse acoustique à une onde acoustique ayant une fréquence nominale située dans la largeur de bande de fonctionnement du transducteur, mais étant suffisamment grandes pour présenter une résistance acoustique relativement faible à l'égard de ladite onde, pour que la composante de réactance de masse des perforations prédomine sur la composante résistive, la plaque se comportant alors comme un filtre passe-bas acoustique présentant un déphasage relativement faible.

30. Appareil suivant la revendication 29, dans lequel la plaque est positionnée axialement entre l'élément transducteur et une des portes.

31. Appareil suivant la revendication 29, dans lequel le filtre (302) comprend une seconde plaque perforée installée à l'intérieur du tube dans le passage intérieur transversalement à l'axe; la seconde plaque (306) étant espacée axialement de la première plaque (304) d'une fraction prédéterminée d'une longueur d'onde correspondant à une onde acoustique ayant une fréquence nominale située dans la bande de fréquence de fonctionnement du transducteur pour former, entre les plaques, une chambre acoustiquement compliante assurant une compliance acoustique grâce à laquelle les énergies acoustiques dans les masses acoustiques et la chambre se comportent comme des éléments de circuit concentré.

32. Appareil suivant la revendication 31, comprenant une troisième plaque perforée (308) installée à l'intérieur du tube dans le passage intérieur, transversalement à l'axe, la troisième plaque étant espacée axialement de la deuxième d'une fraction prédéterminée de ladite longueur d'onde, de sorte que la deuxième plaque (306) est disposée axialement entre la première (304) et la troisième plaque (308) et en est espacée axialement de ladite fraction prédéterminée, une deuxième chambre acoustiquement compliante étant formée entre la deuxième et la troisième plaque et se comportant de la même manière que la première chambre.

33. Appareil suivant la revendication 31 ou 32, dans lequel la fraction prédéterminée est en substance égale ou inférieure à un huitième de ladite longueur d'onde.

34. Appareil suivant la revendication 8, comprenant des moyens de déphasage pour régir la phase des ondes acoustiques dans le passage intérieur;

   les moyens de déphasage (302) comprenant une première section de filtre acoustique située entre les premières portes (16a, 16b) dans la première et la seconde paire de portes; la première section de filtre comprenant une première, une deuxième et une troisième plaque perforée plane (304, 306, 308) espacées axialement, montées transversalement à l'axe dans le tube, l'espacement axial entre les plaques consécutives dans la section de filtre étant une fraction prédéterminée d'une longueur d'onde correspondant à une onde acoustique ayant une fréquence nominale dans la bande de fréquence de fonctionnement du transducteur;

   une deuxième section de filtre (302a) identique à la première section, la deuxième section de filtre étant positionnée axialement entre les secondes portes (16c, 16d) dans la première et la seconde paire de portes;

   les perforations (312) dans chacune des plaques étant suffisamment petites pour présenter une masse acoustique prédéterminée à une onde acoustique de ladite longueur d'onde et suffisamment grandes pour présenter une résistance acoustique relativement faible à cette onde, pour que la composante de réactance de masse des perforations prédomine sur la composante résistive, de sorte que la plaque se comporte comme un filtre passe-bas présentant un déphasage relativement faible;

des plaques adjacentes dans chacune des première et deuxième sections de filtre formant une chambre acoustiquement compliante entre les plaques adjacentes, ce qui assure une compliance acoustique grâce à laquelle les énergies acoustiques dans les masses acoustiques et la chambre se comportent comme des éléments de circuit concentré.

35. Appareil suivant les revendications 29, 30, 31, 32, 33 ou 34, dans lequel chacune des plaques perforées présente une aire perforée totale valant approximativement 40% de l'aire définie par le périmètre de la plaque.

36. Appareil suivant la revendication 2, comprenant au moins un élément transducteur électroacoustique supplémentaire (20b), chaque élément supplémentaire comportant une première et une seconde surface pouvant vibrer; des seconds moyens (24) pour supporter chaque élément supplémentaire par rapport au tube, pour que les premières surfaces soient couplées acoustiquement au milieu de transmission externe et que les secondes surfaces soient couplées acoustiquement au passage intérieur;

les éléments et les portes étant espacés axialement du tube dans un ordre axial, de sorte qu'une porte alterne dans l'ordre axial avec un élément.

37. Appareil suivant la revendication 36, dans lequel une porte (16a, 16d) est prévue à chaque extrémité axiale de l'ordre axial desdits éléments et portes.

38. Appareil suivant la revendication 36 ou 37, dans lequel l'espacement axial entre les éléments et les portes est approximativement égal à une demi-longueur d'onde d'une onde acoustique ayant une fréquence nominale située dans la largeur de bande de fréquence de fonctionnement du transducteur.

39. Appareil suivant la revendication 11, dans lequel l'anneau (22) comporte une première et une seconde extrémité ouverte et un axe allant d'une extrémité à l'autre; la chicane de cavité (118, 120, 122, 124) comprend une cloison longitudinalement en ligne en substance acoustiquement non transmissive, pour isoler mutuellement des segments de paroi interne de l'anneau dans le sens d'une corde dans un plan transversal à l'axe; la cloison étant ouverte à ses extrémités longitudinales pour le cheminement des ondes acoustiques dans le sens longitudinal de la cloison.

**Patentansprüche**

1. Wandlergerät für eine empfangene oder ausgesandte akustische Welle in einem externen Übertragungsmedium (17), mit

einem elektroakustischen Wandler (20) zum Umwandeln zwischen akustischen und elektrischen Signalen, und dieser Wandler erste und zweite Schwingflächen (30, 32) besitzt,

einem Rohrmittel (12) mit ersten und zweiten Enden, einer durchgehenden Achse (Z) und einem akustischen Innendurchgang (15), wobei dieses Rohrmittel zum Tragen des Wandlers (20) dient, so daß die erste Schwingfläche (30) mit dem externen Übertragungsmedium und die zweite Schwingfläche (32) mit dem Innendurchgang akustisch gekoppelt sind,

einer Schlitzeinrichtung (16a, 16d), die zum Leiten akustischer Wellen zwischen dem Innendurchgang und dem externen Übertragungsmediums (17) im Rohrmittel ausgebildet ist,

dadurch gekennzeichnet, daß die Schlitzeinrichtung ein Schlitzepaar (16a, 16d) besitzt, wobei ein erster Schlitz (16a) des Schlitzepaars in einer ersten axialen Richtung in einem vorgegebenen Abstand vom Wandler (20) und ein zweiter Schlitz (16d) des Schlitzepaars in einer von der ersten Richtung abweichenden zweiten Richtung in einem vorgegebenen Abstand angeordnet sind, wobei die vorgegebenen Abstände derart bemessen sind, daß innerhalb eines Frequenzbandes des Wandlerbetriebs eine verstärkende Kombination akustischer Strahlung in einer Querrichtung gegen die Längsachse aus dem Schlitzepaar und der Strahlung aus der ersten Schwingfläche des Wandlerelements geliefert wird, wobei ein Strahlungs-Höchstwert akustischer Wellen oder maximales Ansprechen auf akustische Wellen im externen flüssigen Übertragungsmedium (17) quer zur Achse auftritt.

2. Gerät nach Anspruch 1, worin der Wandler ein zylindrischer phasengesteuerter Wandler zum Übertragen oder Empfangen akustischer Wellen im externen flüssigen Übertragungsmedium (17) ist, und dieser Wandler folgende Mittel enthält:

ein erstes elektroakustisches Wandlerelement (20) mit wenigstens ersten und zweiten Schwingflächen (30, 32), die akustische Wellen in einem zu diesem Zweck damit jeweils gekoppelten Übertragungsmedium ausstrahlen bzw. darauf ansprechen können, wobei das Rohrmittel ein längliches zylindrisches Rohr (12a), eine Zylinderwand und eine Anzahl eines Paares erster und zweiter, im wesentlichen ringförmiger akustischer Schlitze (16a, 16d) in dieser Wand enthalten, das Rohr sich zum inwendigen Füllen mit einem inwendigen akustischen Übertragungsmedium eignet, um einen akustischen Innendurchgang zur Bildung akustischer Übertragungswege zwischen der zweiten Schwingfläche (32) und dem Paar ringförmiger Schlitze darzustellen, die akustisches Koppeln zwischen dem externen flüssigen Übertragungsmedium (17) und dem inwendigen akustischen Übertragungsmedium (15) bewirken,

ein erstes Mittel (24) zum Unterstützen des Wandlerelements in bezug auf das zylindrische Rohr in einer Lage entlang der Längsachse im vorgegebenen Abstand von jedem Schlitz des Schlitzepaares und zum akustischen Koppeln der ersten Schwingfläche des Wandlerelements mit dem externen flüssigen Medium zum Bestimmen der wirksamen akustischen Länge der Übertragungswege.

3. Gerät nach Anspruch 2 mit einem zweiten elektroakustischen Wandlerelement (20b), wobei das erste und das zweite Element (20a, 20b) je erste und zweite Schwingflächen besitzen und jedes Element im Rohr (12) unterstützt wird, so daß die ersten Flächen (30) mit dem externen Übertragungsmedium (17) und die zweiten Flächen (32) mit dem inwendigen Medium (15) akustisch gekoppelt sind, wobei ein dritter, im wesentlichen ringförmiger Schlitz derart im Rohr vorgesehen ist, daß der zweite Schlitz sich zwischen den ersten und dritten Schlitzen befindet, das erste Element sich an einer axialen Stelle zwischen den ersten und zweiten Schlitzen befindet, und mit einem zweiten Mittel (24) zum Unterstützen und zum axialen Anordnen des zweiten elements (20b) in bezug auf das Rohr zwischen den zweiten und dritten Schlitzen (Fig. 22).

4. Gerät nach Anspruch 2 oder 3, worin jedes Wandlerelement (20) zum Steuern eines Strahlungsmusters akustischer Wellen oder zum Ansprechen auf diese akustische Wellen in einer Ebene im wesentlichen senkrecht zur Achse (Z) dient und die Schlitze (16a, 16b) zum Nachhelfen beim Steuern des Strahlungsmusters akustischer Wellen oder beim Ansprechen auf diese akustische Wellen in einer Ebene mit dieser Achse dienen.

5. Gerät nach Anspruch 3 oder 4, worin jedes Wandlerelement zum Erzeugen eines sinusförmigen und/oder kosinusformigen Quermusters dient und die Schlitze (16a, 16b) zur Lieferung eines Steuerfaktors bei der Bestimmung des Quermusters parallel zur Achse dienen.

6. Gerät nach Anspruch 5, worin jedes Wandlerelement einen piezoelektrischen Ring (22) mit Innen- und Außenflächen enthält, wobei die erste Schwingfläche die Ring-Außenfläche und die zweite Schwingfläche die Ring-Innenfläche besitzt, der Ring vier Umfangsquadranten und in jedem der vier Quadranten ein Elektrodenpaar (44,52) enthält, eine Elektrode (44) in jedem Paar leitend mit der Ring-Außenfläche und die andere Elekrode (52) in jedem Paar leitend mit der Ring-Innenfläche verbunden sind.

7. Gerät nach Anspruch 2, worin jeder Schlitz im Abstand von der zweiten Schwingfläche des Wandlerelements liegt, um eine Wegstrecke im Innendurchgang von in etwa einer halben Wellenlänge einer vorgegebenen Frequenz zu liefern (Fig. 22).

8. Gerät nach Anspruch 3 mit einem zweiten Paar ringförmiger Schlitze (16b, 16c), wobei ein erster Schlitz (16b) im zweiten Schlitzepaar axial im Abstand in einer ersten axialen Richtung (Z) vom ersten Schlitz im ersten Schlitzepaar und ein zweiter Schlitz (16c) im zweiten Schlitzepaar axial im Abstand in einer zweiten axialen Richtung (-Z) entgegengesetzt zur ersten axialen Richtung vom zweiten Schlitz (16d) im ersten Schlitzepaar liegen.

9. Gerät nach Anspruch 8, worin die Schlitze symmetrisch im Abstand vom Wandlerelement liegen.

10. Gerät nach Anspruch 8, worin jeder Schlitz im ersten Schlitzepaar eine erste Schlitzöffnung und jeder Schlitz im zweiten Schlitzepaar eine zweite Schlitzöffnung besitzen, wobei die erste Schlitzöffnung flächenmäßig Kleiner ist als die zweite Schlitzöffnung und die erste Schlitzöffnung flächenmäßig kleiner ist als die erste Schwingfläche.

11. Gerät nach Anspruch 2 oder 3, worin jedes Wandlerelement einen elektroakustischen Wandlerring mit Innen- und Außenflächen enthält, wobei die Innenfläche einen Ringraum darstellt, die erste Schwingfläche die Ring-Innenfläche besitzt, und daß zum Verbessern des Wellendruckgradienten zur Innenfläche des Ringes des Wandlerelements ein Hohlraum-Trennmittel (118, 120) im Ringraum (114) angeordnet ist.

12. Gerät nach Anspruch 2, 3, 4 oder 8 mit Phasendrehmitteln (92, 94) zum Drehen der Phase in den Schlitzen im Innendurchgang zum Ändern des Strahlungsmusters akustischer Wellen oder zum Ansprechen auf diese Wellen.

13. Gerät nach Anspruch 12, worin das Phasendrehmittel ein Faltungswellen-Trennmittel im Innendurchgang zum Falten akustischer Wellen in ihrem Weg zwischen der zweiten Fläche und den Schlitzen zum Erhöhen der Weglänge im inwendigen Medium enthält, wobei die Wellenphase auf entsprechende Weise bei den Schlitzen verschoben wird.

14. Gerät nach Anspruch 13, worin die ersten und zweiten axialen Enden des Rohrs geschlossen sind und das Phasendrehmittel eine auf wenigstens einem der geschlossenen Enden im Innendurchgang angeordneten Reflexionsfläche (104, 106) besitzt, wobei das Trennmittel akustische Wellen im inneren Durchgang an der Reflexionsfläche reflektieren läßt.

15. Gerät nach Anspruch 3, worin jeder der Schlitze in bestimmtem Abstand von der näheren zweiten Schwingfläche des Wandlerelements liegt, um eine Wegstrecke im Innendurchgang von in etwa einer halben Wellenlänge einer akustischen Welle mit Nennfrequenz im betrieblichen Frequenzband des Wandlers zu bilden.

16. Gerät nach Anspruch 10, worin der axiale Abstand der Schlitze von der zweiten Fläche des Wandlerelements den Weg zwischen jedem der Schlitze und der zweiten Fläche von in etwa einer halben Wellenlänge mit einer vorgegebenen Wellenfrequenz liefert, wobei jeder Schlitz des zweiten Schlitzepaars axial im Abstand von der zweiten Fläche des Wandlerelements liegt, um eine akustische Wegstreckenlänge entlang des zweiten Weges zwischen jedem Schlitz des zweiten Schlitzepaars und der zweiten Fläche von in etwa eineinhalben Wellenlänge mit der vorgegebenen Wellenfrequenz zu bilden.

17. Gerät nach Anspruch 5, worin das Rohr eine Anzahl von Rohrabschnitten besitzt, ein Rohrabschnitt (12b) zwischen benachbarten Schlitzen liegt, das Wandlerelement (20) einen Zylinderring aus piezoelektrischem Material enthält, der in fester Beziehung zum Rohr unterstützt wird, die Außenfläche (30) des Rings die erste Schwingfläche des Wandlerelements und die Innenfläche (32) des Rings die zweite Schwingfläche des Wandlerelements enthält, eine Anzahl länglicher Rippen (18) mit gleichen gebogenen Schritten im Abstand voneinander bei jedem Schlitz liegen, die in fester Beziehung die Rohrabschnitte an jeder Seite jedes Schlitzes unterstützen.

18. Gerät nach Anspruch 17, worin das Rohr (12) erste (12a) und zweite Abschnitte (12b) besitzt, wobei der erste Abschnitt mit einem ersten Längsende des Rings konzentrisch ist und daran grenzt, und der zweite Abschnitt mit einem zweiten Längsende des Rings konzentrisch ist und daran grenzt, ein erster Zylinderbügel (26) an den ersten Abschnitt und an das erste Ende des Rings geheftet ist, und ein zweiter Zylinderbügel (26) an den zweiten Abschnitt und an das zweite Ende des Rings geheftet ist.

19. Gerät nach Anspruch 2 oder 3 mit einem Einkapselungsmittel (24) zum Einkapseln jedes Wandlerelements zum Schützen des Wandlerelements vor der Umgebung.

20. Gerät nach Anspruch 17, worin das Rohr (12) erste (12a) und zweite (12b) konzentrische Längsabschnitte mit je ersten und zweiten axialen Enden besitzt, wobei ein Zylinderkragen (158) konzentrisch mit dem Rohr bei einem ersten axialen Ende an ein axiales Ende des ersten Rohrabschnitts und beim zweiten axialen Ende an ein axiales Ende des zweiten Rohrabschnitts angeheftet ist, ein Mittel (162) das den Ring im Kragen fest unterstützt, und dieser Kragen (158) einen im wesentlichen ringförmigen Schlitz (160) im wesentlichen fluchtend mit der Ring-Außenfläche besitzt, um im wesentlichen völlige akustische Kopplung zwischen der Ring-Außenfläche und dem externen Übertragungsmedium zu bewirken.

21. Gerät nach Anspruch 2, worin das Wandlerelement einen eingeschobenen Zustand und einen ausgeschalteten Zustand besitzt, der Innendurchgang länglich ist, das erste Unterstützungsmittel (196) für Längsbewegung im Innendurchgang ausgelegt ist, wobei das Wandlerelement (20) in einem eingeschobenen Zustand neben dem zweiten Ende (180) des Rohres (172) aufbewahrt werden kann und durch das Unterstützungsmittel (196) in der Längsrichtung in eine Zwischenstellung gebracht werden kann, so dass es in einem ausgeschobenen Zustand zwischenliegend im Innendurchgang vom Unterstützungsmittel unterstützt werden kann.

22. Gerät nach Anspruch 21 mit einem länglichen Kanister (170), der zum teleskopischen Hinein- und Herausschieben im ersten Ende (178) des Rohrs (172) montiert ist, wobei der Kanister bis zum zweiten Ende (180) in einem eingeschobenen Zustand in den inneren Durchgang hineinschiebbar ist, und weg vom zweiten Ende aus dem ersten Ende in einem Zustand herausschiebbar ist, wobei das Unterstützungsmittel (196) flexibel und am Kanister (170) befestigt ist, wobei beim Herausschieben des Kanisters im Durchgang das Unterstützungsmittel sich strafft, das Wandlerelement (20) zur Zwischenstellung hin bewegt und in dieser Stellung im Durchgang unterstützt wird.

23. Gerät nach Anspruch 11, worin der Ring eine Anzahl bogenförmig im Abstand liegender Elektroden (52, 54, 56, 50) besitzt, die an die Innenfläche (32) geheftet sind, das Hohlraumtrennmittel Trennwandmittel (114) enthält, die in bezug auf die Ring-Innenfläche zum Trennen und Isolieren wenigstens einer Elektrode von den anderen Elektroden in Sehnenrichtungen positioniert sind, und einen im wesentlichen akustisch ungehemmten Längsweg zwischen diesen Elektroden und den Schlitzen im Innendurchgang bilden.

24. Gerät nach Anspruch 23, worin die Trennwandmittel (118, 120, 122, 124) zum Trennen und Isolieren jeder der Elektroden von jeder der anderen Elektroden in Sehnenrichtungen dienen.

25. Gerät nach Anspruch 23 oder 24, worin jede Trennwand zwei im wesentlichen steife Außenschichten (108, 110) besitzt, die zum Verringern der Akustikwellenübertragung durch eine zwischenliegende Druckverringerungsschicht (112) voneinander getrennt sind.

26. Gerät nach Anspruch 23, worin vier Elektroden (50, 52, 54, 56) vorgesehen sind, wobei jede Elektrode im wesentlichen einen Quadrant der Innenfläche (32) bestreicht, die Trennwand (118, 120, 122, 124) einen X-förmigen Querschnitt sowie vier längliche Ränder parallel zur Achse besitzt, und die Trennwandränder sich an die bogenförmigen Zwischenräume zwischen den Elektroden anschließen.

27. Gerät nach Anspruch 13, worin das Faltungswellen-Trennmittel (92, 94) einen Wellenleiter mit einem quergerichteten Akustikwellen-Abblockrand (96, 98) enthält, der Innen- und Außenperimeter besitzt und bei seinem Außenperimeter an die Innenwand des inwendigen Durchgangs zwischen der zweiten Schwingfläche (32) und einem der Schlitze (16a) angeheftet ist, ein Kanal mit ersten und zweiten offenen Enden beim ersten Kanalende an das Innenperimeter angeheftet ist und sich am einen Schlitz vorbei und zum ersten Rohrende (104) hin erstreckt, wobei die Akustikwellen-Wegstrecke zwischen der zweiten Fläche und dem einen Schlitz über das zweite Ende des Kanals gefaltet ist.

28. Gerät nach Anspruch 27, worin das Phasendrehmittel eine Reflexionsfläche auf wenigstens einem der ersten und zweiten Rohrenden (104, 106) und das Trennmittel die Reflexion akustischer Wellen im Innendurchgang an der Reflexionsfläche bewirkt, wobei die Reflexionsfläche eine akustische Impedanzfläche zum Einstellen der Phase und Amplitude der daran reflektierten akustischen Wellen besitzt.

29. Gerät nach Anspruch 12, worin das Phasendrehmittel wenigstens ein Akustikwellenfiltermittel enthält, das eine erste durchlöcherte Platte (304) enthält, die im Innern des Rohrs im Innendurchgang quer zur Achse angebracht ist, wobei die Löcher (312) klein genug sind, um eine akustische Masse für eine akustische Welle mit einer Nennfrequenz in der betrieblichen Bandbreite des Wandlers darzustellen, aber groß genug, um einen verhältnismäßig kleinen akustischen Widerstand für diese Welle darzustellen, so daß die Massenträgheitskomponente der Löcher der Widerstandskomponente vorherrscht, wobei die Platte als akustisches Tiefpaßfilter mit einer verhältnismäßig kleinen Phasendrehung wirkt.

30. Gerät nach Anspruch 29, worin die Platte zwischen dem Wandlerelement und einem der Schlitze axial angeordnet ist.

31. Gerät nach Anspruch 29, worin das Filtermittel (302) eine durchlöcherte zweite Platte enthält, die im Innern des Rohrs im Innendurchgang quer zur Achse angebracht ist, die zweite Platte (306) axial im Abstand von der ersten Platte (304) um einen vorgegebenen Bruchteil einer Wellenlänge entsprechend einer akustischen Welle mit einer Nennfrequenz im betrieblichen Wandlerfrequenzband angeordnet ist, um eine akustisch nachgiebige Kammer zwischen den Platten zu bilden, die eine akustische Nachgiebigkeit bewirkt, wobei die akustischen Energien in den akustischen Massen und in der Kammer als Schaltungsgefüge aus konzentrierten idealen Elementen wirken.

**32.** Gerät nach Anspruch 31 mit einer durchlöcherten dritten Platte (308), die im Innern des Rohrs im Innendurchgang quer zur Achse angebracht ist, wobei die dritte Platte um einen vorgegebenen Bruchteil der Wellenlänge axial im Abstand von der zweiten Platte liegt, die zweite Platte (306) sich axial zwischen den ersten (304) und dritten Platten (308) und davon um den vorgegebenen Bruchteil axial im Abstand liegt, und zwischen den zweiten und dritten Platten eine zweite akustisch nachgiebige Kammer gebildet wird und auf die Art und Weise der ersten Kammer wirkt.

**33.** Gerät nach Anspruch 31 oder 32, worin der vorgegebene Bruchteil im wesentlichen weniger als oder gleich einem Achtel der Wellenlänge beträgt.

**34.** Gerät nach Anspruch 8 mit Phasendrehmitteln zum Steuern der Phase akustischer Wellen im Innendurchgang, wobei das Phasendrehmittel (302) einen ersten akustischen Filterabschnitt zwischen den ersten Schlitzen (16a, 16b) in den ersten und zweiten Schlitzepaaren enthält, der erste Filterabschnitt erste, zweite und dritte axial im Abstand voneinander liegende, planare durchlöcherte Platten (304, 306, 308) enthält, die quer zur Achse im Rohr angebracht sind, der axiale Zwischenraum zwischen aufeinanderfolgenden Platten im Filterabschnitt um einen vorgegebenen Bruchteil einer Wellenlänge entsprechend einer akustischen Welle mit einer Nennfrequenz im betrieblichen Frequenzband des Wandlers beträgt, ein zweiter Filterabschnitt (302a) gleich dem ersten Abschnitt ist, der zweite Filterabschnitt zwischen den zweiten Schlitzen (16c, 16d) in den ersten und zweiten Schlitzepaaren axial aufgestellt ist, die Löcher (312) in jeder der Platten klein genug sind, um eine vorgegebene akustische Masse für eine akustische Welle der Wellenlänge darzustellen, aber groß genug, um einen verhältnismäßig kleinen akustischen Widerstand für diese Welle darzustellen, so daß die Massenträgheitskomponente der Löcher der Widerstandskomponente vorherrscht, wobei die Platte als akustisches Tiefpaßfilter mit einer verhältnismäßig kleinen Phasendrehung wirkt, und benachbarte Platten in jedem der ersten und zweiten Filterabschnitte eine akustisch nachgiebige Kammer zwischen benachbarten Platten bilden, die eine akustische Nachgiebigkeit bewirkt, wobei die akustischen Energien in den akustischen Massen und in der Kammer als Schaltungsgefüge aus konzentrierten idealen Elementen wirken.

**35.** Gerät nach Anspruch 29, 30, 31, 32, 33 oder 34, worin jede der durchlöcherten Platten eine Gesamtdurchlochungsfläche besitzt, die etwa 40% der vom Plattenperimeter bestimmten Fläche beträgt.

**36.** Gerät nach Anspruch 2 mit wenigstens einem zusätzlichen elektroakustischen Wandlerelement (20b), jedes zusätzliche Element erste und zweite Schwingflächen besitzt, ein zweites Mittel (24) zum Unterstützen jedes zusätzlichen Elements in bezug auf das Rohr dient, so daß die ersten Flächen mit dem externen Übertragungsmedium akustisch gekoppelt sind und die zweiten Flächen mit dem Innendurchgang akustisch gekoppelt sind, die Elemente und Schlitze in axialer Reihefolge gegen das Rohr axial im Abstand liegen, so daß ein Schlitz mit einem Element in axialer Reihenfolge abwechselt.

**37.** Gerät nach Anspruch 36, worin es an jedem axialen Ende der axialen Reihenfolge der Elemente und Schlitze ein Schlitz (16a, 16d) gibt.

**38.** Gerät nach Anspruch 36 oder 37, worin der axiale Zwischenraum zwischen den Elementen und Schlitzen in etwa eine halbe Wellenlänge einer akustischen Welle mit einer Nennfrequenz in der betrieblichen Frequenzbandbreite des Wandlers beträgt.

**39.** Gerät nach Anspruch 11, worin der Ring (22) erste und zweite offene Enden und eine durchgehende Achse besitzt, das Hohlraum-Trennwandmittel (118, 120, 122, 124) eine im wesentlichen akustisch nicht übertragende, in der Längsrichtung ausgerichtete Trennwand zum Isolieren innerer Wandsegmente des Rings voneinander in einer Sehnenrichtung in einer Ebene quer zur Achse, wobei für akustische Wellenwegstrecken die Trennwand an ihren Längsenden in der Längsrichtung der Trennwand offen ist.

FIG 1

FIG 2

FIG 3

FIG 4

FIG 5

FIG. 5B

FIG. 5C

FIG. 5A

FIG. 7

FIG. 8

FIG 6    FIG 6A    FIG 9    FIG 12

FIG 10    FIG 11

FIG 13

FIG 14

FIG 14A

FIG 15

FIG 16

FIG 17

FIG 18

FIG 19

FIG 20

FIG 20A

FIG 21

14a
300
16a
12c
16b
20a
27
12d
16c
20b
12e
16d
14b

$\frac{\lambda}{2}$
$\frac{\lambda}{2}$
$\frac{\lambda}{2}$
$\frac{\lambda}{2}$

F I G. 22

12
10
16a
310
304
306
302
16b
308
12a
17
15
20
16c
308a
302a
310a
306a
16d
304a
12b

F I G. 23A

304
305
310
17
306
307
12a
308
302
16a
10
12
15
16b
12a

F I G. 23

312
304

F I G. 24

312
304

F I G. 25

35